# EUROPEAN PATENT APPLICATION

(11) **EP 2 259 546 A1**
(43) Date of publication of application: **08.12.2010**
(21) Application number: 10004020.3
(22) Date of filing: 15.04.2010
(51) Int. Cl.: H04L 29/06, H04L 12/14, H04W 12/06, G06F 21/00, G06Q 20/00, H04W 4/24

(54) **Communication apparatus, mobile terminal, communication system, non-contact communication device, network connection method, and program**

(30) Priority: 01.06.2009 JP 2009132285
(71) Applicant: Sony Corporation, Tokyo 180-0075 (JP)
(72) Inventor: Ueno, Masatoshi, Tokyo (JP); Kawakami, Daisuke, Tokyo (JP)
(74) Representative: Müller - Hoffmann & Partner

(57) **Abstract**

A communication apparatus includes: a wireless communication unit connecting to a network via another apparatus by wireless communication; a settlement processing unit executing settlement processing of connection fees to the network by controlling a non-contact communication unit capable of reading out information stored in a non-contact communication device via non-contact communication, and writing information to the non-contact communication device via non-contact communication so as to update monetary information stored in the non-contact communication device; an authentication information recording unit controlling the non-contact communication unit to write authentication information, provided from the other apparatus when settlement processing by the settlement processing device is completed, to the non-contact communication device; and an authentication processing unit controlling the non-contact communication unit to read the authentication information from the non-contact communication device, and executing authentication processing as to the other apparatus using the authentication information, thereby establishing network connection by the wireless communication unit.

## Description

### BACKGROUND OF THE INVENTION

### 1. Field of the Invention

The present invention relates to a communication apparatus, a mobile terminal, a communication system, a non-contact communication device, a network connection method, and a program.

### 2. Description of the Related Art

In recent years, the advance of wireless communication technology has enabled network connection services using wireless communication network, not only at offices and homes but also at public spaces in town, at airports, or the like. As of recent, implementation of the infrastructure of wireless communication networks based on wireless communication standards such as Wi-Fi (IEEE 802.11) and WiMAX (Worldwide Interoperability for Microwave Access: IEEE 802.16) is making progress, and providing of network connection services which use such wireless communication networks is being studied. Service providers provide wireless communication environments to wireless base stations from user terminals and connection environments to wide area networks from wireless base stations.

In the case of receiving network connection service, users provide their credit card numbers and personal information to service providers and perform registration procedure to obtain authentication information for performing connection authentication to wide area networks via wireless base stations. At this time, users have to access a user registration page of a service provider and manually input their credit card numbers and individual information. However, manually inputting the credit card numbers and personal information at public spaces, where there is a high risk of electronic eavesdropping, should be avoided as much as possible. In addition, it is troublesome to manually input credit card numbers and personal information. Therefore, a system for automatic input of such information using a non-contact Integrated Circuit (hereinafter referred to simply as "IC") card is being sought.

A system for input of information with non-contact IC cards is described in, for example, Japanese Unexamined Patent Application Publication No. 2003-229872 and Japanese Unexamined Patent Application Publication No. 2004-7351. A technique is described wherein setting information for connecting to an access point is recorded in a non-contact IC card, and the non-contact IC card is held up to equipment to be connected to, so as to read setting information thereto, thereby completing automatic connection setting. There is also described a technique wherein holding the non-contact IC card up to the access point enables setting information, for connecting to the access point, to be written to the non-contact IC card. It is a fact that using these technologies enables complicated setting work relating to wire connection to be greatly simplified, which markedly improves the convenience of users.

### SUMMARY OF THE INVENTION

An arrangement wherein the techniques described above are applied to network connection services then can be understood as being an arrangement wherein credit card numbers and personal information or the like are written to a non-contact IC card, and user registration is performed using such information, for example. Using such a system enables registration operations of information to be completed just by holding up the non-contact IC card. However, what users are unsatisfied with is not just the point that information input takes time relating to the user registration procedure of network connection service. For example, credit card transactions have been a prerequisite in many cases heretofore, so users who have no credit cards have few opportunities to receive network connection services. Accordingly, a system has been studied wherein safe and simple fee settlement and connection setting can be performed so as to use the network system easily even for users who have no credit cards, using non-contact communication devices such as non-contact IC cards or the like.

It has been found desirable to provide a new and improved communication apparatus, a mobile terminal, a communication system, a non-contact communication device, a network connection method, and a program that enables safe and simple fee settlement and connection setting on network connection services using wireless communication networks.

According to an embodiment of the present invention, there is provided a communication apparatus including: a wireless communication unit which connects to a network via another apparatus by wireless communication; a settlement processing unit which executes settlement processing of connection fees to the network by controlling a non-contact communication unit capable of reading out information stored in a non-contact communication device via non-contact communication, and writing information to the non-contact communication device via non-contact communication so as to update monetary information stored in the non-contact communication device; an authentication information recording unit which controls the non-contact communication unit to write authentication information, provided from the other apparatus when settlement processing by the settlement processing device is completed, to the non-contact communication device; and an authentication processing unit which controls the non-contact communication unit to read the authentication information out from the non-contact communication device, and executes authentication processing as to the other apparatus using the authentication information, thereby establishing a network connection by the wireless communication unit.

A period of validity may be set for the authentication information, wherein, in the event that the network connection is temporarily cut off, and connection to the network is attempted again within the period of validity for the authentication information written to the non-contact communication device, the settlement processing unit does not execute settlement processing for connection fees to the network, and the authentication processing unit executes authentication processing regarding the other apparatus using authentication information read out from the non-contact communication device.

An arrangement may be made wherein, in the event that authentication information with a period of validity is written to the non-contact communication device at another communication apparatus, and connection to the network is attempted by holding up the non-contact communication device to the non-contact communication unit of the communication apparatus within the period of validity of the authentication information, the settlement processing unit does not execute settlement processing for connection fees to the network, and the authentication processing unit executes authentication processing regarding the other apparatus using authentication information read out from the non-contact communication device.

An arrangement may be made wherein, in the event that there exist a plurality of the other apparatuses providing connection service to the network, the authentication information recording unit controls the non-contact communication unit so as to write, to the non-contact communication device, information of the other apparatuses providing connection service which is the object of settlement processing at the settlement processing unit, in a manner correlated with the authentication information.

The non-contact communication device may store address information for accessing each of the other apparatuses by the wireless communication unit; with the authentication information recording unit controlling the non-contact communication unit so as to write, to the non-contact communication device, address information which is information of the other apparatuses, the authentication information, and the period of validity of the authentication information, in a correlated manner; and the authentication processing unit identifying the authentication information within the period of validity at the point that connection to the network is attempted, and executes authentication processing to the other apparatuses by accessing the other apparatuses based on address information correlated with the authentication information that has been identified.

An arrangement may be made wherein, in the event that there exist a plurality of the other apparatuses providing connection service to the network, and order of priority has been set of each of set other apparatuses; the settlement processing unit performs settlement processing of connection fees to the network with a connection service which the other apparatus with high order of priority provides, as an object; and the authentication processing unit executes authentication processing as to the other apparatus with high order of priority, to establish network connection by the wireless connection unit.

The communication apparatus may further include an area detecting unit which detects an area where the apparatus is located; wherein, in the event that there exist a plurality of the other apparatuses providing connection service to the network, and the quality of connection services provided by each of the other apparatuses differ from one area to another, the settlement processing unit identifies the other apparatus with high quality of the connection service in the area detected by the area detecting unit, and executes settlement processing of connection fees to the network, with the connection service provided by the other apparatus as an object, and the authentication processing unit executes authentication processing as to the other apparatus of which the quality of the connection service is high, so as to establish network connection by the wireless communication unit.

The communication apparatus may further include: a viewing/listening restriction unit which reads out age information stored in the non-contact communication device by controlling the non-contact communication, and imposes viewing/listening restriction on contents provided via network connection by the wireless communication unit, based on the age information.

An arrangement may be made wherein, in the event that a plurality of types of monetary information are stored in the non-contact communication device, and an order of priority is set for each of the types of monetary information, the settlement processing unit executes settlement processing of connection fees for the network by updating the monetary information of the type with the highest order of priority.

The non-contact communication device may be installed in a mobile terminal, the mobile terminal further including a mobile communication unit which performs communication via a different wireless communication network from the wireless communication network which the wireless communication unit uses, an application obtaining unit which obtains an application for forming a storage region for the authentication information in the non-contact communication device using the mobile communication unit, and a region formation unit which forms a storage region for the authentication information in the non-contact communication device using the application obtained by the application obtaining unit; wherein, in the event of attempting connection to a network via a certain the other apparatus for the first time, the mobile terminal uses the application obtaining unit to obtain an application for forming a storage region for authentication information provided by the other apparatus, and uses the application to form a storage region for the authentication information by the region formation unit; and wherein the information recording unit writes the authentication information to the storage region formed by the region formation unit of the mobile terminal.

According to an embodiment of the present invention, there is provided a mobile terminal, including: a non-contact communication device regarding which information is read and written by non-contact communication by a non-contact communication unit, which a communication apparatus capable of connecting to a network via another apparatus by wireless communication has; a mobile communication unit which performs communication via a different wireless communication network from the wireless communication network which the wireless communication unit uses; an application obtaining unit which obtains an application for forming a storage region for the authentication information in the non-contact communication device using the mobile communication unit; and a region formation unit which forms a storage region for the authentication information in the non-contact communication device using the application obtained by the application obtaining unit; wherein a first storage region where monetary information is stored is provided in the non-contact communication device; and wherein, in the event of being held up to the non-contact communication unit of the communication apparatus to attempt connection to a network via a certain the other apparatus for the first time, the application obtaining unit is used to obtain an application for forming a storage region for authentication information provided by the other apparatus, and the application is used to form a second storage region for the authentication information by the region formation unit; and wherein monetary information stored in the first storage region is updated in settlement processing of the communication apparatus, authentication information provided from the other apparatus due to completion of the settlement processing is stored to the second storage region, and the authentication information stored in the second storage region is used to execute authentication processing as to the other apparatus.

According to an embodiment of the present invention, there is provided a communication system including: a first communication apparatus including a wireless communication unit which connects to a network via another apparatus by wireless communication, a settlement processing unit which executes settlement processing of connection fees to the network by controlling a non-contact communication unit capable of reading out information stored in a non-contact communication device via non-contact communication, and writing information to the non-contact communication device via non-contact communication, so as to update monetary information stored in the non-contact communication device, an authentication information recording unit which controls the non-contact communication unit to write authentication information, provided from the other apparatus when settlement processing by the settlement processing unit is completed, to the non-contact communication device, and an authentication processing unit which controls the non-contact communication unit to read the authentication information out from the non-contact communication device, and executes authentication processing as to the other apparatus using the authentication information; and a second communication apparatus in which the non-contact communication device is installed, the second communication apparatus including a mobile communication unit which performs communication via a different wireless communication network from the wireless communication network which the wireless communication unit of the first communication apparatus uses, an application obtaining unit which obtains an application for forming a storage region for the authentication information in the non-contact communication device using the mobile communication unit, and a region formation unit which forms a storage region for the authentication information in the non-contact communication device using the application obtained by the application obtaining unit.

Here, in the event of attempting connection to a network via a certain the other apparatus for the first time, the mobile terminal uses the application obtaining unit to obtain an application for forming a storage region for authentication information provided by the other apparatus, and uses the application to form a storage region for the authentication information by the region formation unit; and the second communication apparatus writes the authentication information to the storage region formed by the region formation unit of the mobile terminal using the authentication processing unit, and executes authentication processing as to the other apparatus using the authentication information stored in the storage region by the authentication processing unit, thereby establishing a network connection by the wireless communication unit.

According to an embodiment of the present invention, there is provided a non-contact communication device including: a storage unit capable of which information can be read/written by non-contact communication via a non-contact communication unit of a communication apparatus having a wireless communication unit which connects to a network via another apparatus by wireless communication; wherein the storage unit is provided with a first storage region where monetary information is stored, and a second storage region where authentication information used for the communication apparatus to connected to the network is stored; and wherein, in the event of being held up to the non-contact communication unit of the communication apparatus to attempt connection to the network at the communication apparatus, monetary information stored in the first storage region is updated via the non-contact communication during settlement processing of connection fees to the network, and when the settlement processing is completed, authentication information provided from the other apparatus is stored in the second storage region via the non-contact communication, with the authentication information stored in the second storage region is used for authentication processing for establishing network connection by the wireless communication unit.

According to an embodiment of the present invention, there is provided a network connection method, for a communication apparatus to perform communication using a wireless communication unit which connects to a network via another apparatus by wireless communication, and a non-contact communication unit capable of reading out information stored in a non-contact communication device via non-contact communication and writing information to the non-contact communication device via non-contact communication, the method including the steps of: first controlling, of the non-contact communication unit, to update monetary information stored in the non-contact communication device, so as to execute settlement processing for connection fees to the network; second controlling, of the non-contact communication unit by the communication device, to write authentication information, provided from the other apparatus when settlement processing in the first controlling has been completed, to the non-contact communication device; and third controlling, of the non-contact communication unit by the communication device, to read the authentication information out from the non-contact communication device, and execute authentication processing as to the other apparatus using the authentication information, thereby establishing a network connection by the wireless communication unit.

According to an embodiment of the present invention, there is provided a program causing a computer to execute: control of a communication apparatus to perform communication using a wireless communication unit which connects to a network via another apparatus by wireless communication, and a non-contact communication unit capable of reading out information stored in a non-contact communication device via non-contact communication and writing information to the non-contact communication device via non-contact communication; and the steps of first controlling, of the non-contact communication unit, to update monetary information stored in the non-contact communication device, so as to execute settlement processing for connection fees to the network, second controlling, of the non-contact communication unit by the communication device, to write authentication information, provided from the other apparatus when settlement processing in the first controlling has been completed, to the non-contact communication device, and third controlling, of the non-contact communication unit by the communication device, to read the authentication information out from the non-contact communication device, and execute authentication processing as to the other apparatus using the authentication information, thereby establishing a network connection by the wireless communication unit.

According to an embodiment of the present invention, there is provided a computer-readable recording medium in which the program is recorded.

With the above-described configurations, fee settlement and connection settings can be performed safely and easily with network connection services using a wireless communication network.

### BRIEF DESCRIPTION OF THE DRAWINGS

Fig. 1 is an explanatory diagram for illustrating a system configuration example of a network connection service providing system using a general wireless transmission path;
Fig. 2 is an explanatory diagram for illustrating the overall flow of processing up to starting service usage at a network connection service providing system, using a general wireless transmission;
Fig. 3 is an explanatory diagram for illustrating a brief overview of what sort of service is to be realized on the network connection service providing system according to an embodiment of the present invention;
Figs. 4A and 4B are explanatory diagrams for illustrating a data configuration example of an IC card used on the network communication service providing system according to the embodiment;
Fig. 5 is an explanatory diagram for illustrating a system configuration example of the network connection service providing system according to the embodiment;
Fig. 6 is an explanatory diagram for illustrating the overall flow of processing up to starting of service usage at the network connection service providing system according to the embodiment;
Fig. 7 is an explanatory diagram for illustrating the flow of processing the user terminal performs according to the embodiment;
Fig. 8 is an explanatory diagram for illustrating the flow of processing a wireless base station and proxy-AAA server perform according to the embodiment;
Fig. 9 is an explanatory diagram for illustrating the flow of processing a Home-AAA server performs according to the embodiment;
Fig. 10 is an explanatory diagram for illustrating a system configuration example of a network connection service providing system according to a modification of the embodiment of the present invention;
Fig. 11 is an explanatory diagram for illustrating a function configuration example of a user terminal according to the modification;
Fig. 12 is an explanatory diagram for illustrating the overall flow of processing up to starting of service usage at a network connection service providing system according to the modification;
Fig. 13 is an explanatory diagram for illustrating the flow of processing a user terminal performs according to the modification;
Fig. 14 is an explanatory diagram for illustrating the flow of processing an authentication system performs according to the modification;
Fig. 15 is an explanatory diagram for illustrating the overall flow of processing up to starting of service usage at the network connection service providing system according to the modification;
Fig. 16 is an explanatory diagram for schematically illustrating transfer operations of service rights at the network connection service providing system according to the modification example;
Fig. 17 is an explanatory diagram for illustrating a system configuration example of the network connection service providing system according to another modification of the embodiment;
Fig. 18 is an explanatory diagram for illustrating a function configuration example of a mobile terminal according to the modification;
Fig. 19 is an explanatory diagram for illustrating the overall flow of processing up to starting of service usage at the network connection service providing system according to the modification;
Fig. 20 is an explanatory diagram for illustrating a system configuration example of a network connection service providing system according to yet another modification of the embodiment;
Fig. 21 is an explanatory diagram for illustrating the flow of service provider selection processing according to the modification;
Fig. 22 is an explanatory diagram for illustrating a system configuration example according to yet another modification of the embodiment;
Fig. 23 is an explanatory diagram for illustrating a hardware configuration example of a user terminal according to the embodiment and modifications of the present invention; and
Figs. 24A and 24B are explanatory diagrams for illustrating the hardware configuration example of an IC card and IC chip, and a reader/writer, according to the embodiment and modifications of the present invention.

### DESCRIPTION OF THE PREFERRED EMBODIMENTS

An embodiment of the present invention will be described in detail with reference to attached drawings. Note that with the present specification and drawings, redundant description of components having substantially the same functional configuration will be omitted by denoting with the same reference numerals.

### About the Order of Description

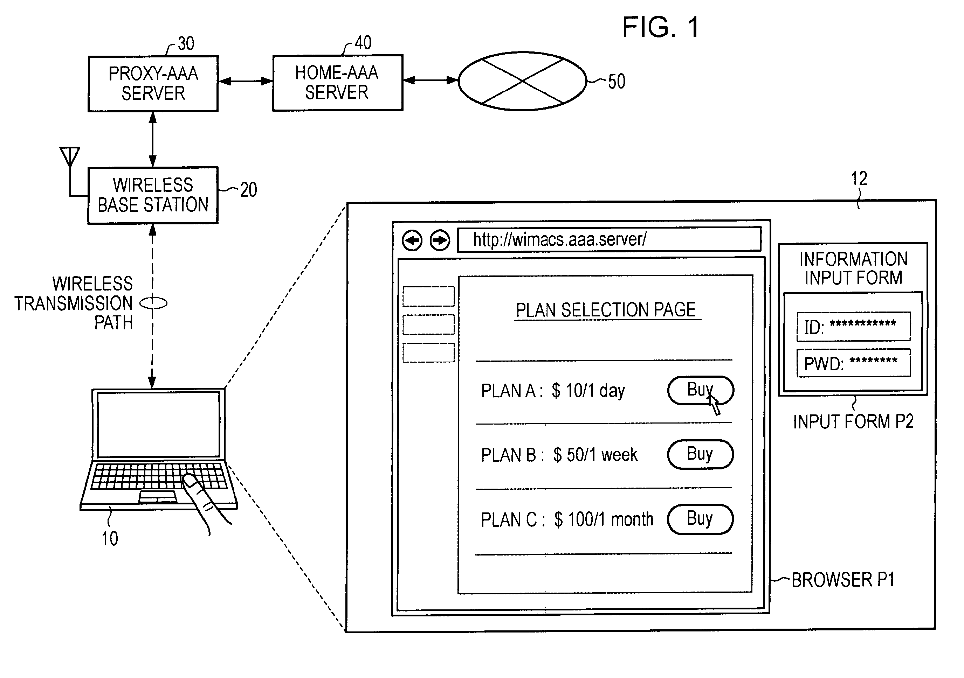

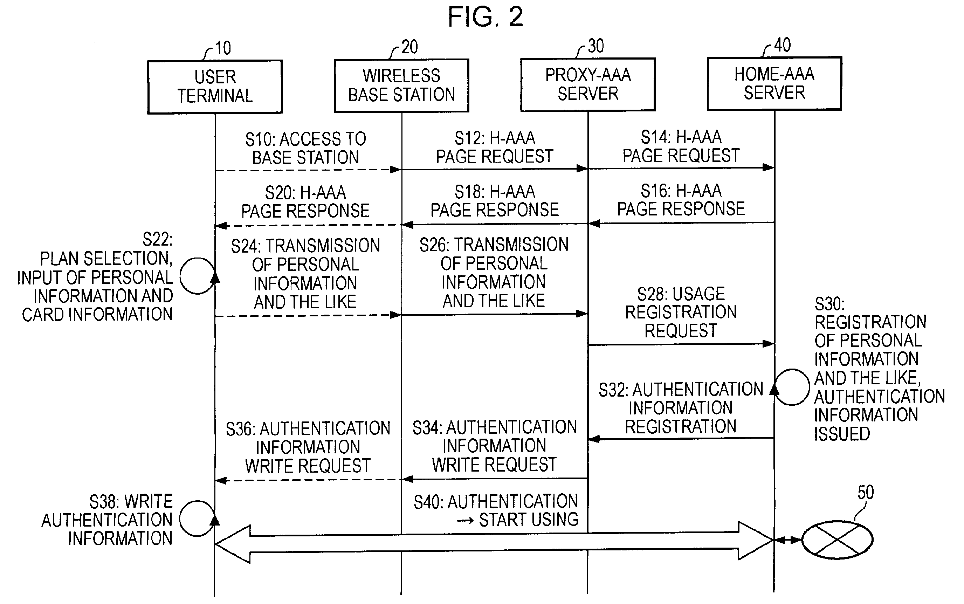

Now, the order of description relating to the embodiment of present invention will be described below in brief. The system configuration of a network connection service providing system, and procedures up to starting of the service by the system thereof will be described first, with reference to Figs. 1 and 2.

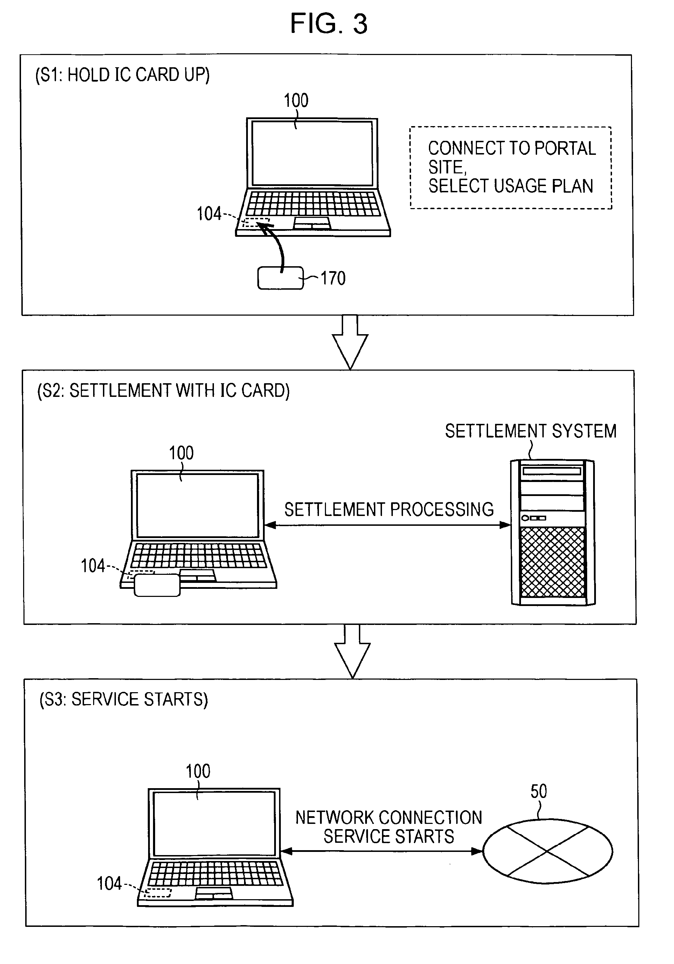

Next, the system configuration of the network connection service system and procedures of up to starting of the service by the system thereof according to the present embodiment will be described with reference to Fig. 3 through 9. Description of the configuration of the user terminal, IC card, wireless base stations, Proxy-AAA server, and Home-AAA server included in the system thereof, will be made along with the flow of processing that each component performs.

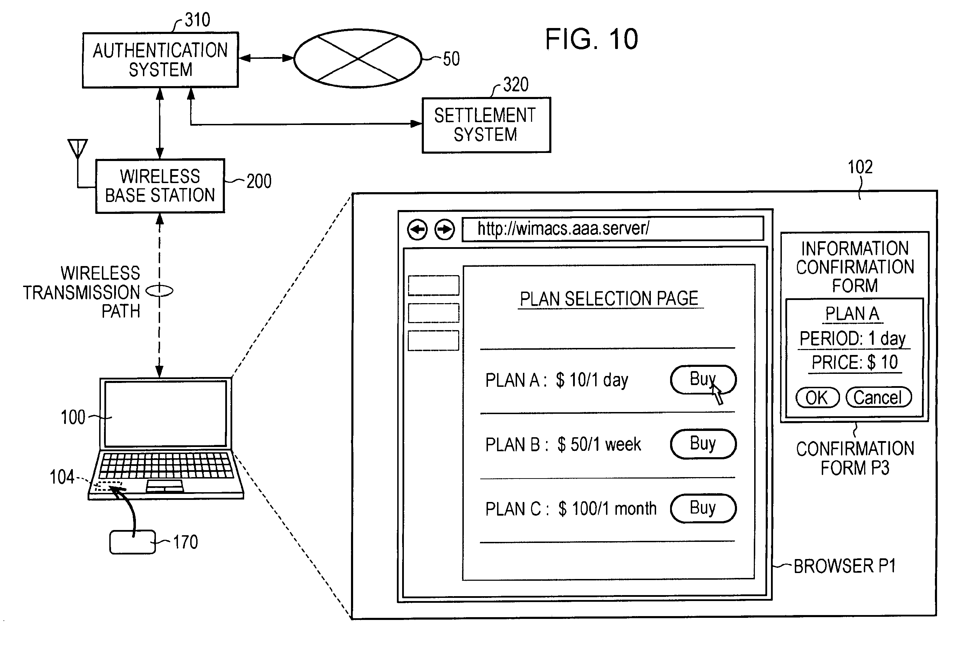

Next, a modification will be described with reference to Figs. 10 through 16, 20, and 21, in which the configuration of the network connection service providing system according to the present embodiment is partly changed. The description of the configuration of the user terminal, authentication system, and settlement system included in the system thereof will be made along with the flow of processing that each component performs.

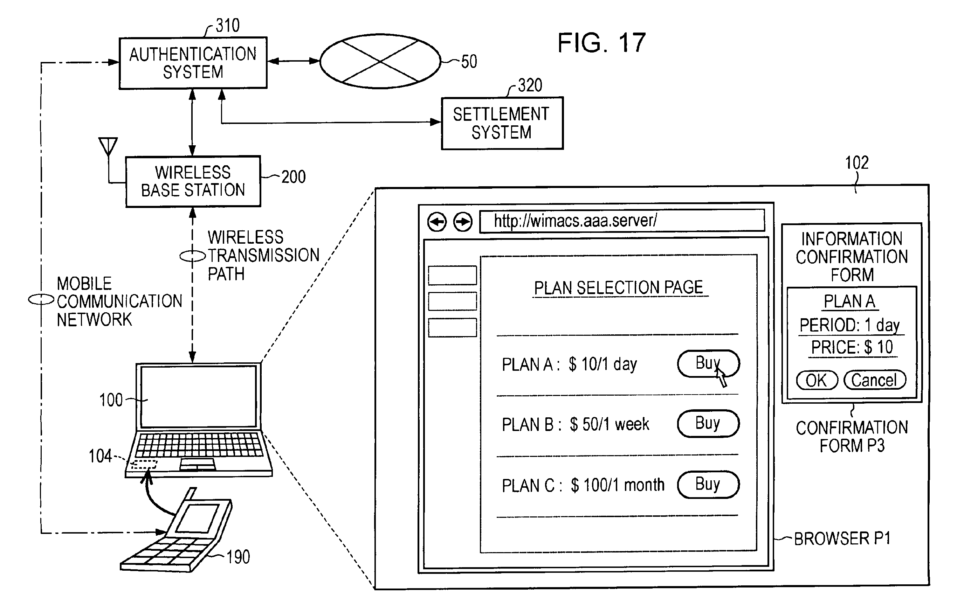

A configuration of using a mobile terminal as a non-contact communication device will be described next with reference to Figs. 17 through 19, as a modification in which the configuration of the network connection service providing system according to the present embodiment is partly changed.

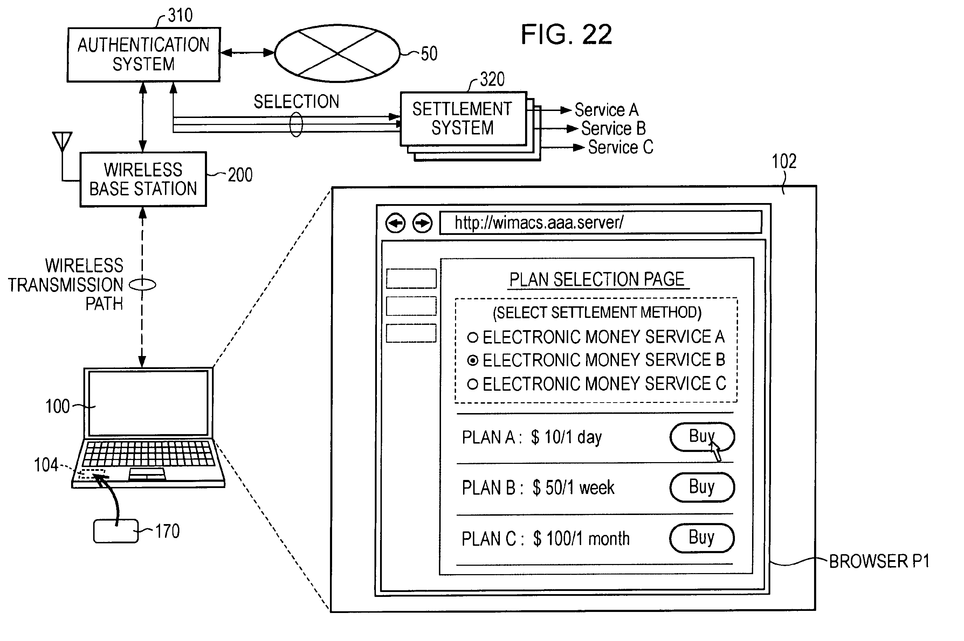

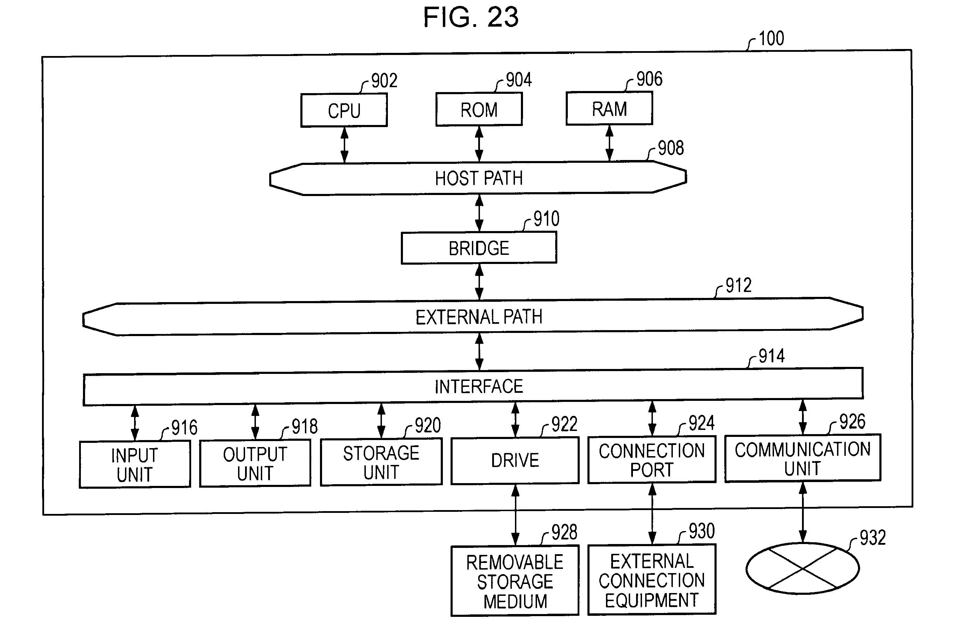

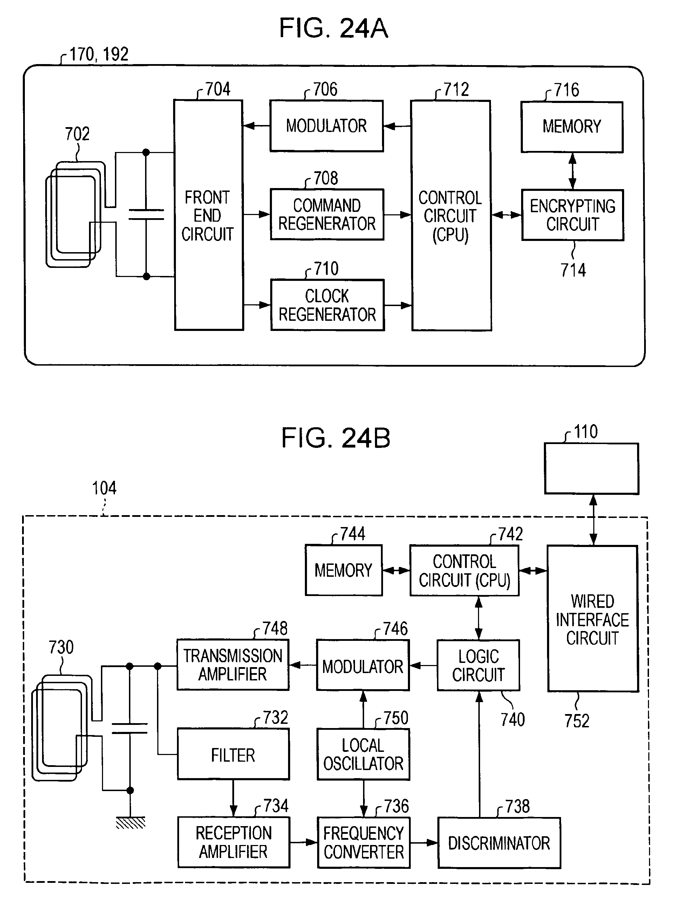

The configuration of selecting a settlement method using the non-contact communication device will be described next with reference to Fig. 22, as yet another modification of the network connection service providing system according to the present embodiment. Furthermore, a hardware configuration example such as a user terminal included in the network connection service providing system according to the present embodiment will be described with reference to Figs. 23 and 24.

### Items to be Described

1: Introduction
1-1: System Configuration of Network Connection Service

### Providing System

1-2: Overall Processing Flow up to the Starting Service Usage 2: Embodiment
2-1: Overview
2-2: Data Structure of IC Card
2-3: System Configuration of Network Connection Service Providing System
2-4: Overall Processing Flow up to the Starting of the Service Usage
2-4-1: Processing at User Terminal
2-4-2: Processing at Wireless Base Station and Proxy-AAA Server
2-4-3: Processing at Home-AAA Server
3: Modification 1 (configuration in Which Authentication System / Settlement System are Separated)
3-1: System Configuration of Network Connection Service Providing System
3-2: Function Configuration of User Terminal
3-3: Overall Processing Flow up to Starting of the Service Usage (If User Unregistered)
3-3-1: Processing at User Terminal
3-3-2: Processing at Authentication System
3-4: Overall Processing Flow up to Starting of the Service Usage (If User Registered)
3-5: Transfer Method of Service Right
3-6: Selection Method in the Case Multiple Service Providers Exist)
4: Modification 2 (Authentication Method Using Mobile Terminal)
4-1: Function Configuration of Mobile Terminal
4-2: Overall Processing Flow up to Starting of the Service Usage (If User Unregistered)
5: Modification 3 (Configuration Enabling Selection Of Multiple Settlement Methods)
6: Hardware Configuration of User Terminal, Etc.
1: Introduction

Before describing the embodiment of the present invention, the configuration of a general network connection service providing system will be described. Here, a network connection service providing system which connects between user terminals and wireless base stations by a WiMAX access network, with service providers performing connection from wireless base stations to networks beyond, is assumed. Note that WiMAX stands for Worldwide Interoperability for Microwave Access.

### 1-1: System Configuration of Network Connection Service Providing System

A network connection service providing system includes a user terminal 10, wireless base station 20, Proxy-AAA server 30, and Home-AAA server 40, as shown in Fig. 1. The network connection service providing system is connected by a wireless transmission path over which is performed communication based on a standard such as WiMAX between the user terminal 10 and wireless base station 20. Accordingly, the Hone-AAA server 40 is connected to a wide area network 50 such as the Internet. Note that AAA stands for Authentication Authorization Accounting in the Present Specification.

The user terminal 10 is a terminal users use, and is an object to be provided with the network connection service. The user terminal 10 also has a wireless communication function which enables wireless communication based on a standard such as WiMAX, for example. The wireless base station 20 is a transmission facility for wireless communication based on a standard such as WiMAX with the user terminal 10.

The wireless base station 20 provides information obtained from the user terminal 10 via the wireless transmission path to the Proxy-AAA server 30, and also provides information obtained from the Proxy-AAA server to the user terminal 10. The Proxy-AAA server 30 presents a Web page for a user registration to the user terminal 10 and provides authentication information for connecting to the network. Note that the Web page and authentication information which the Proxy-AAA server 30 presents or provides are provided by the Home-AAA server 40.

Now, upon the Web page of the Home-AAA service 40 being presented, the user inputs information of a service plan, personal information, credit card number of the user, and so forth (hereinafter, personal information or the like) using the Web page of presented Home-AAA server 40. Once the input has ended, the Proxy-AAA server 30 obtains the input personal information or the like from the user terminal 10 and provides this to the Home-AAA server 40.

Accordingly, the Proxy-AAA server 30 obtains authentication information issued by the Home-AAA server 40 according to the providing of personal information or the like and provides it to the user terminal 10 via the wireless base station 20. Thus, the Proxy-AAA server 30 mainly serves to control connection by the wireless base station 20, and to mediate the communication between the user terminal 10 and Home-AAA server 40.

The Home-AAA server 40 serves to provide connection service to the wide area network 50, as well as to execute user authentication. As described above, upon personal information or the like of the user from the Proxy-AAA server 30 having been input, the Home-AAA server 40 issues authentication information based on the input personal information or the like, and provides the authentication information to the user terminal 10 through the Proxy-AAA server 30 and wireless base station 20.

In the case of access from the user terminal 10 using the authentication information, the Home-AAA server 40 executes user authentication based on the authentication information, and permits connection to the wide area network 50 in the case that user authentication is successful.

With the present system, network connection service is provided in this way. Note that, what sort of network connection service is provided to the user is decided by way of the user selecting one of the plans set by the service provider, for example. Fig. 1 illustrates one example, which is a menu and so forth displayed on the terminal screen 12 in the case that the user accesses the Proxy-AAA server 30 from the user terminal 10. If the user accesses the proxy-AAA server 30 with the browser P1, for example, a selection page of the service plans set by the service provider is shown. For example, service plans having different prices set according to the length of the service providing plans are presented to the user.

Here, if the user selects a desired plan from the service plans displayed on the browser P1, an input form P2 for inputting personal information or the like is displayed on the terminal screen 12. For example, spaces for inputting a credit card number and personal information of the user are provided on the input form P2. Accordingly, the user inputs the credit card number and personal information or the like on the input form P2, and advances the user registration operations. The personal information or the like input on the input form P2 is provided to the Home-AAA server 40 through the wireless base station 20 and the Proxy-AAA server 30, and the user registration is executed. At this time, charging settlement for a service providing fee from a credit card is executed at the Home-AAA server 40.

Upon the settlement successfully ending and the user registration being completed, authentication information is provided from the Home-AAA server 40 to the user terminal 10 via the Proxy-AAA server 30 and wireless base station 20. The user terminal 10 records the authentication information provided from the Home-AAA server 40 in the storage within the terminal, to be used at the time of starting the network connection service. Thus, recording the authentication information in the storage enables connecting to the wide area network 50 freely from the user terminal 10 via the Home-AAA server 40, as long as the authentication information has not expired. Specially, the system thereof is connected by a wireless transmission path relating to WiMAX or the like between the user terminal 10 and wireless base station 20, so as to be provided with high-quality network connection service at any desired point as long as within service range.

A brief description has made above about the system configuration. While only one Home-AAA server 40 which provides connection service to the wide area network 50 was illustrated with the above description, there are cases wherein multiple service providers exist. In this case, the user has to select the.desired service provider and access the Home-AAA server 40 corresponding to the service provider. However, after selecting the desired Home-AAA server 40, the service is provided along the flow described above.

### 1-2: Overall Processing Flow up to the Starting of the Service Usage

Here, the overall processing flow up to the starting of the service usage according to the above network connection service providing system will be described in detail with reference to Fig. 2. Fig. 2 is an explanatory diagram for illustrating the overall processing flow up to the starting of the service usage according to the network connection providing system.

An access occurs from the user terminal 10 to the wireless base station 20 first, as shown in Fig. 2 (S10). At this time, the address information relating to the Web page of the service providers wherein the user terminal 10 desires the access are provided to the Proxy-AAA server 30 via the wireless base station 20 (S12). The Proxy-AAA server 30 accesses the Home-AAA server 40 which the address information therein indicates, based on the address information provided from the user terminal 10 via the wireless base station 20, and receives information providing of the Web page (H-AAA page) (S14 and S16). The Web page of the Home-AAA server 40 is denoted to the user terminal 10 through the Proxy-AAA server 30 and wireless base station 20 (S18 and S20).

Next, the user selects the desired service plan and inputs personal information and credit card numbers or the like, using the Web page displayed on the terminal screen 12 of the user terminal 10 (S22). Upon completion of the input of personal information or the like by the user, personal information or the like are transmitted to the Proxy-AAA server 30 via the wireless base station 20 from the user terminal 10 (S24 and S26), the usage registration request is transmitted to the Home-AAA server 40 along with personal information or the like (S28). Upon obtaining the usage registration request along with personal information or the like, the Home-AAA server 40 executes the user registration with personal information or the like, and issues authentication information (S30). At this time, the settlement processing of the service fee is executed with the credit card numbers included in personal information or the like.

Authentication information issued by the Home-AAA server 40 is provided to the Proxy-AAA server 30 (S32), and is provided to the user terminal 10 through the wireless base station 20 (S34 and S36). At this time, a write request is transmitted from the Proxy-AAA server 30 to the user terminal 10 so as to write the authentication information in the storage. Receiving this written request, the user terminal 10 writes provided authentication information through the Proxy-AAA server 30 and the wireless base station 20 in the storage in the terminal thereof (S38). Upon executing the starting operations of the network connection by the user, the user terminal 10 reads out the authentication information written in the storage, and starts the connection to the wide area network 50, executing authentication processing to the Home-AAA server 40 with the authentication information (S40).

As mentioned above, the description was made of the flow up to the starting of the service providing according to the above network connection service providing system. Thus, users have to manually input the credit card numbers and personal information for receiving the providing of a general network connection service. Using the user terminal 10 wherein a full keyboard has been set such as that which is provided to a personal computer (hereinafter, PC) enables the information input thereof, comparatively easily. However, using equipment which does not have the a keyboard such as a cell phone or car navigation system or the like as the user terminal 10 causes a heavy burden for the user at the time of input of personal information or the like.

Additionally, when using the service in a public space, there is a risk to be eavesdropped by others at the time of inputting personal information or the like. Furthermore, it is hard for the user who has no credit cards to receive the providing of the service. The Present Inventors arrived at the idea of using a non-contact communication device for information input and settlement, in light of the above. However, a system assuming such usage is indispensable in order to use the non-contact communication device for settlement on the network connection service, in addition to using the non-contact communication device for information input. Hereinafter, the system conceived by the Present Inventors will be described specifically.

### 2: Embodiment

The embodiment of the present invention will be described. The present embodiment proposes a system for realizing an authentication process and settlement process for a network connection service, using an IC card which is an example of a non-contact communication device. Using the arrangement of the present invention releases the user from manual input of credit card numbers and personal information, and also enables users who have no credit cards to easily be provided with the service.

### 2-1: Overview

First, an overview of the network connection service providing system according to the present embodiment will be described, with reference to Fig. 3, and an outline of that which is desired to be realized is briefly described. Fig. 3 is an explanatory diagram for schematically illustrating the outline of that which is desired to be realized at the network connection service providing system according to the present embodiment. Note that the primary technical feature of the present embodiment is in the system for realizing service content such as exemplified in Fig. 3. The detail of the system and various innovations subjected to therein will be described in detail, hereinafter.

As described above, on a general network connection service providing system, at the time of the starting of the network connection, credit card numbers and personal information or the like has to be input manually. However, manual input is inconvenient, and in addition, receiving the network connection service is difficult for a user who has no credit cards. Therefore, the Present Inventor has devised a system capable of using the network connection system with an IC card 170, as shown in Fig. 3.

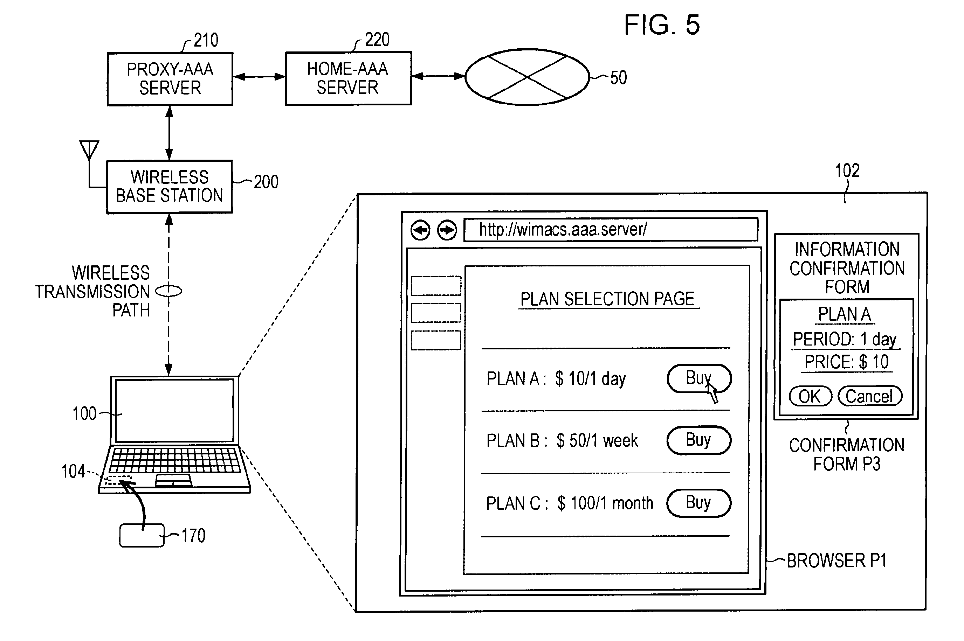

According to this system, the user first holds the IC card 170 up to the reader/writer 104 mounted to (or externally connected to) the user terminal 100, which the user has (S1). Then, the user terminal 100 reads out address information of the portal site which the service provider provides from the IC card 170 via reader/writer 104, and connects to the portal site. For example, the user terminal 100 starts the browser P1, and displays a select page of the service plan on the terminal screen 102, as shown in Fig. 5. Accordingly, upon the user selecting the service plan, the user terminal 100 displays the confirmation form P3 to confirm the type of service plan that the user selects.

Upon completing the confirmation of the service plan, the user terminal 100 reads out personal information or the like, and accesses the settlement system to execute the settlement processing (S2). At this time, the user terminal 100 makes settlement of the network connection fee requested from the settlement system, by updating monetary information stored in the IC card 170. Such a system enables executing the settlement processing of the network connection fee, even if the user is not holding the credit card. Furthermore, since the user does not have to manually input the credit cards and personal information or the like, the risk of the eavesdropping of this information can be reduced, and the user burden occurring at the time of manual input can be relieved.

Now, upon the settlement processing being completed, authentication information used for the network connection from the service provider is provided to the user terminal 100. The authentication information provided from the service provider is written to the IC card 170 via the reader/writer 104, by the user terminal 100. If the network connection is started, the user can receive the providing of the network connection service by holding the IC card 170 wherein authentication information is written, up to the reader/writer 104 mounted to the user terminal 100 (S3). At this time, the user terminal 100 reads out authentication information from the IC card 170 via the reader/writer 104, and completes authentication processing by the service provider. Upon completing the authentication processing, the user terminal 100 can connect to the wide area network 50.

The above description is the sort of processing of the network connection service providing system which is desired to be realized with the present embodiment. The following data structure is applied to the IC card 170, in order to realize the type of processing.

### 2-2: Data Structure of IC Card

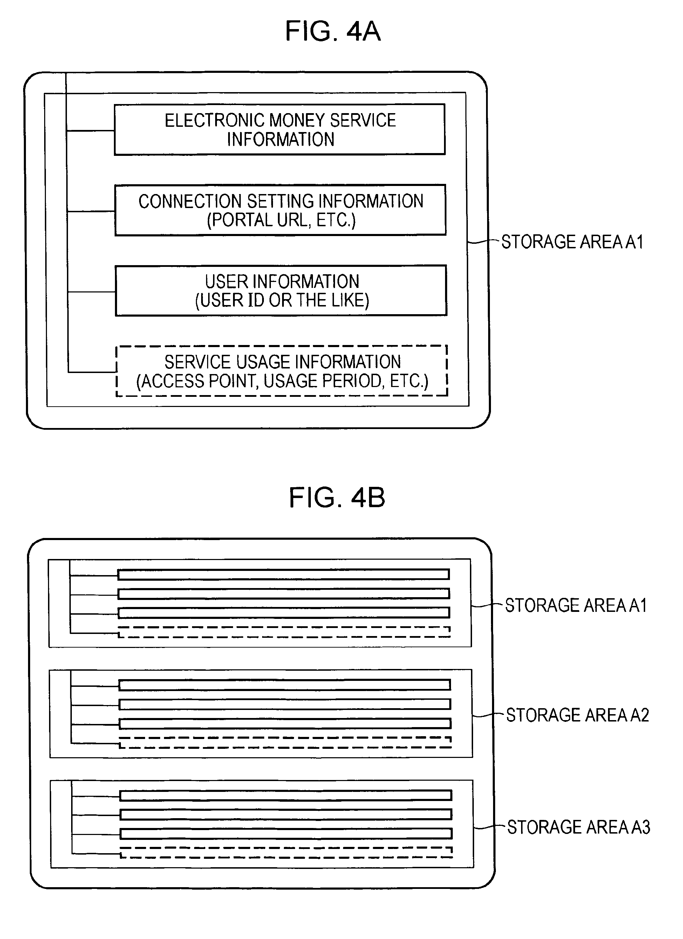

Here, a data structure of the IC card 170 according to the present embodiment will be described with reference to Figs. 4A and 4B. Figs. 4A and 4B are explanatory diagrams illustrating an example of the data structure of the IC card 170 according to the present embodiment. Note that the data structure shown here is constructed within the storage that the IC card 170 has. In the storage of the IC card 170, at least one storage area is provided. Electronic money service information, connection setting information, user information, and service usage information or the like are stored therein, such as shown in Fig. 4A.

However, as for the data format of the IC card 170, NDEF (NFC Data Exchange Format) standardized with NFC Forum can be used, and also an independent format standardized by venders can be used. Additionally, if NDEF is used, a Type defined by the WiMAX Forum or a Type defined by vendors is used as the NFC Forum Type.

Electronic money service information is one example of monetary information according to various electronic money services. Connection setting information is address information for accessing a portal site of service providers (for example, URL). However, URL stands for Uniform Resource Locator.

Storing this connection setting information to the IC card 170 enables the user terminal 100 to automatically access the portal site of the service provider, based on the connection setting information of the IC card 170.

Note that if multiple service providers exist, multiple connections setting information may be set within the IC card 170. Furthermore, information of the service providers who try connecting, may be stored preferentially. In this case, information indicating priority of each service provider is preferable to be stored associated with the connection setting information. This kind of association enables the user terminal 100 to easily try connecting to the high priority service providers.

User information is one example of personal information. There is User ID, age information, and gender information or the like, as user information. Accordingly, if the IC card 170 has a function such as a commuter pass, travel segments and expiration date information or the like are also stored in the IC card 170. For example, based on the age information stored in the IC card 170, providing of the service, such as controlling a Web service which can be provided on the network connection used the IC card 170, and guiding a recommended Web service can be obtained. Furthermore, combinations of user information and equipment information (for example, MAC address) specific to the user terminal 100 can be used for management of access rights.

Service usage information is information such as authentication information and usage period or the like. Information of the service provider, authentication information provided by the service provider, period of validity of the authentication information, and so forth, are sequentially stored in the IC card 170, as service usage information, for example. If the settlement has completed and the service usage information is stored in the IC card 170, the user can receive the network connection service from the provider of the authentication information, using the authentication information stored, until the period of validity stored as the service usage information ends.

For example, upon the IC card being held up to the reader/writer 104, the service usage information of the IC card 170 is read out from the user terminal 100, and after the period of validity is confirmed, if within the period of validity, the network connection is started. On the other hand, if the period of validity has passed, the user terminal 100 accesses the portal site of the service providers, based on the connection information, using authentication information, for example, and displays a select page of the service plan. Providing such a data structure enables the user to not only avoid manual input of personal information or the like, but also to leave the period management relating to the network connection service rights to the IC card 170 and the user terminal 100.

Accordingly, multiple storage areas (for example, storage area A1, A2, and A3) can be provided in the IC card 170, as shown in Fig. 4B. For example, if a storage area is provided according to a kind of electronic money service, at least electronic money service information and user information are stored in each storage area. Furthermore, if the storage area is provided for each service provider, at least connection setting information and service usage information are stored in each storage area. It goes without saying that a kind of electronic money may correspond to a kind of service provider that can settle using the electronic money service thereof. Accordingly, in the storage area provided at each electronic money service, a storage area may be provided for each service provider.

In addition, priority may be provided in the storage area set for each service provider. In this case, when the IC card 170 is held up, the user terminal 100 reads out the connection setting information and service usage information stored in the high priority storage area, and accesses the service providers based on read-out information. Similarly, priority may be provided to the storage area set for each kind of electronic money service. In this case, when the settlement processing by the IC card 170 is executed, the user terminal 100 reads out electronic money service information and user information stored in the high quality storage area, and accesses to the settlement system based on the read-out information. Such a data structure enables separating multiple electronic money services, according to the use opportunity.

As mentioned above, a data structure of the IC card 170 of an embodiment of the present embodiment has been described. Next, a configuration of the network connection service providing system which can realize the sort of service shown in Fig. 3, using the IC card 170 which has the data structure shown in Figs. 4A and 4B will be described.

### 2-3: System Configuration of Network Connection Service Providing System

Here, a system configuration of the network connection service providing system according to the present embodiment will be described, with reference to Fig. 5. Fig. 5 is an explanatory diagram for illustrating a system configuration of the network connection service providing system according to the present embodiment. Note that the system configuration shown here is assumed to connect the user terminal 100 and wireless base station 200 with a WiMAX access network, with service providers performing connection from the wireless base station 200 to the wide area network 50 beyond.

The network connection service providing system according to the present embodiment mainly includes a user terminal 100, wireless base station 200, Proxy-AAA server 210, and Home-AAA server 220, as shown in Fig. 5. The network connection service providing system is connected by the wireless transmission path wherein communication is performed between the user terminal 100 and wireless base station 200 based on the standard of the WiMAX or the like. Also, the Home-AAA server 220 is connected by a wide area network 50 such as the Internet. Furthermore, reader/writer 104 is mounted to the user terminal 100, which can read out information stored in the IC card 170 from the user terminal 100, and write information to the IC card 170. Note that the IC card 170 has the data structure shown in Figs. 4A and 4B.

The user terminal 100 is the terminal which users use and is subject to being provided with the network connection service. The user terminal 100 also has a wireless communication function which enables wireless communication based on a standard such as WiMAX, for example. The wireless base station 200 is a transmission facility for the wireless communication with the user terminal 100 based on a standard such as WiMAX. The wireless base station 200 provides information obtained from the user terminal 100 via the wireless transmission path to the Proxy-AAA server 210, and also provides information obtained from the Proxy-AAA server 210 to the user terminal 100.

The Proxy-AAA server 210 presents a Web page for a user registration to the user terminal 100, and provides authentication information for connecting to the network. However, the Web page and authentication information which the Proxy-AAA server 210 presents or provides are provided by the Home-AAA server 220. Thus, the Proxy-AAA server 30 mainly controls connections by the wireless base station 200, and serves to mediate communication between the user terminal 100 and Home-AAA server 220.

Now, a Web page of the Home-AAA server 220 is presented, triggered by the IC card 170 being held up to the reader/writer 104 of the user terminal 100. First, upon the IC card 170 being held up to the reader/writer 104, address information for accessing a portal site of the Home-AAA server 220 stored in the IC card 170 by the user terminal 100 is read out, and the IC card 170 is connected to the portal site automatically. Accordingly, the user starts the browser P1, and does not have to input the address of portal site. Upon accessing the portal site, the browser P1 is displayed on the terminal screen 102 of the user terminal 100, and a Web page of the Home-AAA server 220 is presented. At this time, a select page of the service page is presented, as a Web page, for example.

Upon the Web page of the Home-AAA server 220 being presented, the user selects the service plan from the Web page of the presented Home-AAA server 220. If the user selects the service plan, for example, a confirmation form P3 for confirming the type of selection is displayed to the terminal screen 102, and confirmation of the type of service and the service fee thereof is prompted. At this time, the user does not have to input the credit card numbers and personal information or the like manually, at all. Upon proceeding to the settlement processing, the user terminal 100 obtains information of the service fee from the Home-AAA server 220 first, to update the monetary information of the IC card 170, and executes the settlement processing of the service fee.

Upon completion of the settlement processing, authentication information is issued by the Home-AAA server 220 and provided to the user terminal 100. The user terminal 100 writes authentication information presented from the Home-AAA server 220 to the IC card 170. At this time, the user terminal 100 writes the period of validity of authentication information and information of the service provider to the IC card 170, together. As described above, the Home-AAA server 220 serves to settle the service fee of the network connection service, and to provide authentication information. In addition, the Home-AAA server 220 serves to execute user authentication, using provided authentication and also to provide connection service to the wide area network 50.

Starting the network connection, the user terminal 100 reads out authentication information stored to the IC card 170, and accesses the Home-AAA server 220 via the Proxy-AAA server 210 to execute user authentication. At this time, the user does not have to input personal information and authentication information or the like manually, at all. If the Home-AAA server 220 succeeds in user authentication, the Home-AAA server 220 permits the network connection to the wide area network 50, as to the user terminal 100. As a result, the user terminal 100 can connect to the wide area network 50 via the wireless base station 200.

As described above, on the network connection service providing system according to the present embodiment, holding the IC card 170 up to the reader/writer 104 of the user terminal 100 completes user registration, settlement processing, and user authentication processing with very little user manual input. The above description is constructed so that the user selects the service plan, but for example, writing in the conditions for the selected service plan enables the selection processing to be done automatically. In this case, as a condition of the service plan, a method to write priorities of the period of validity and service providers to the IC card 170 will be considered.

For example, methods such as sorting out high priority to the service provider whose line speed is fast, or also sorting out high priority to the service provider who provides the service with reasonable connection fee, will be considered. Accordingly, the quality of the service changes, depending on the positional relation and the distance or the like between the wireless base station 200 and the user terminal 100. Thus, a method which sets the IC card 170 so as to select preferentially the service provider which provides the highest quality of the service at the position of the user terminal 100 by implementing the positional detecting function in the user terminal 100 may be conceived. Note that the positional detecting function can be realized by using GPS, or also can be realized by the estimating method which uses a delay time of the signal received from the wireless base station 200.

Thus, description has been made regarding a system configuration. Next, the overall processing up to starting of the service usage will be described.

### 2-4: Overall Processing Flow up to the Starting of the Service Usage

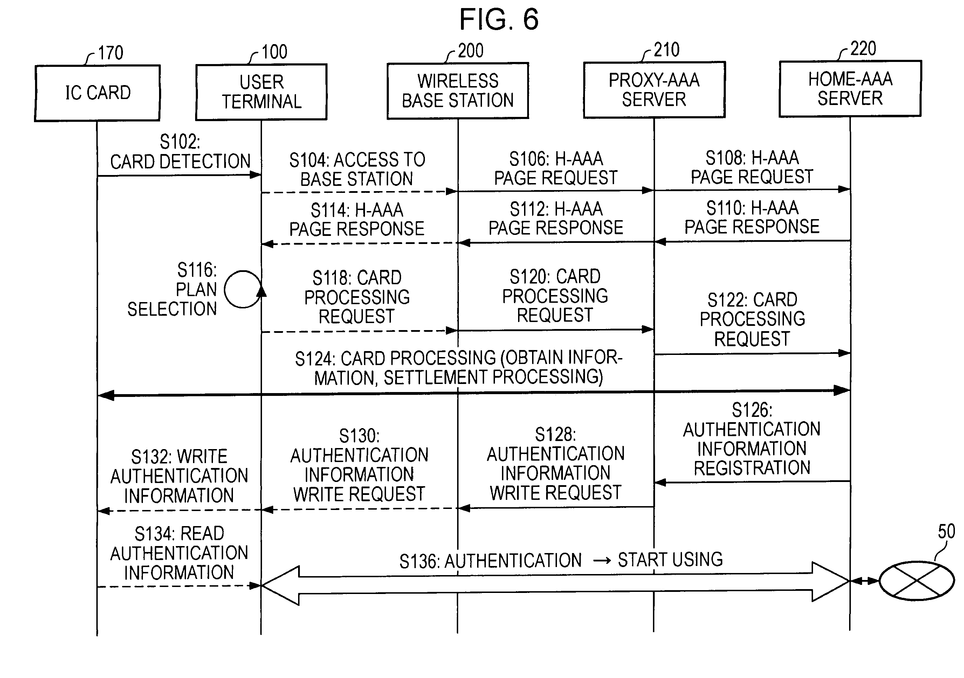

Here, overall processing flow up to the starting service usage on the network connection service providing system according to the present embodiment will be described in detail, with reference to Fig. 6. Fig. 6 is an explanatory diagram for illustrating the overall processing of the flow on the network connection service providing system up to the start of serving usage.

As shown in Fig. 6, first, the IC card 170 is held up, and the IC card 170 is detected by the user terminal 100 via the reader/writer 104 (S102). Accordingly, an access occurs from the user terminal 100 to the wireless base station 200 (S104). At this time, address information relating to a Web page of the service provider whom the user terminal 100 desires to access, is provided to the Proxy-AAA server 210 via the wireless base station 200 (S106). The Proxy-AAA server 210 accesses the Home-AAA server 220 which address information thereof is indicating, based on address information provided from the user terminal 100 via the wireless base station 200, and receives information providing of the Web page (H-AAA page) (S108 and S110).

Accordingly, a Web page of the Home-AAA server 220 is presented through the Proxy-AAA server 210 and wireless base station 200 (S112 and S114). Next, the user selects the desired service plan, using the Web page displayed on the terminal screen 102 of the user terminal 100 (S116). At this time, the user does not have to input the credit card numbers and personal information or the like, at all. Upon completion of the selection of the service plan by the user, a card processing request is transmitted to the Proxy-AAA server 210 via the wireless base station 200 from the user terminal 100 (S118 and S120). The card processing request transmitted is communication information for requesting the settlement processing of the service fee by the IC card 170.

Next, the card processing request transmitted to the Proxy-AAA server 210 is transferred to the Home-AAA server 220 (S122). The Home-AAA server 220 having received the card processing request executes the settlement of the service fee according to the card processing with the IC card 170 (S124). At this time, transparently connecting the IC card 170 and Home-AAA server 220 by an encrypted communication path prevents secret information of the IC card 170 from being subject to eavesdropping and tampering. Upon completion of the settlement by the card processing, the Home- AAA server 220 registers user information of the IC card 170, and this is provided to the Proxy-AAA server 210 which issues authentication information (S126)

Authentication information provided to the Proxy-AAA server 210 is provided to the user terminal 100 through the wireless base station 200 (S128 and S130). At this time, a write request is transmitted to the user terminal 100 from the Proxy-AAA server 210, so as to write authentication information to the IC card 170. Upon receiving this write request, the user terminal 100 writes authentication information provided through the proxy-AAA server 210 and wireless base station 200, to the IC card 170 (S132). Accordingly, upon starting operations of the network connection by the user being executed, the user terminal 100 reads out authentication information written to the IC card 170 (S134), and starts connection to the wide area network 50, executing authentication processing to the Home-AAA server 220 with authentication information (S136).

As mentioned above, the flow up to starting the service providing on the network connection service providing system according to the present embodiment has been described. Thus, processing for manual input of information by the user in the processing up to starting of the service usage does not exist. Even for the selection processing of the service plan requested just once in the example in Fig. 6, the desired plan is simply selected from the selection menu, so character input operation by the keyboard or the like does not have to be performed. Note that automation can be enabled by setting desired information about this plan selection operation in the IC card 170.

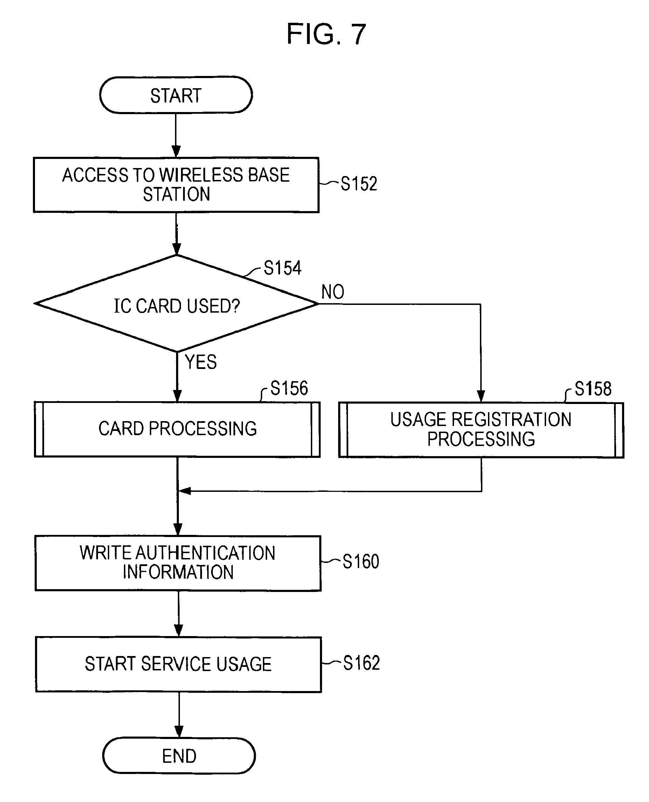

Therefore, the user does not have to manually input information at the time of starting of the network connection service usage; the user registration processing, settlement processing, and user authentication processing are completed simply by holding the IC card 170 up to the reader/writer 104. In addition, the settlement is executed using electronic money service information of the IC card 170, whereby users who have no credit cards can receive the providing of the network connection service. Here, a description has been made about the overall processing flow; next, description of processing that the user terminal 100, wireless base station 200, Proxy-AAA server 210, and Home-AAA server 220 execute, will be described one by one with reference to Figs. 7 through 9.

### 2-4-1: Processing at User Terminal

First, a flow of a processing by the user terminal 100 will be described with reference to Fig. 7. Fig. 7 is an explanatory diagram for illustrating the flow of the processing by the user terminal 100.

As shown in Fig. 7, upon the IC card 170 being held up to the reader/writer 104, the user terminal 100 reads out the address information of service providers from the IC card 170, and accesses the wireless base station 200 to provide address information to the Proxy-AAA server 210 (S152). Furthermore, the proxy-AAA server 210 connects to the Home-AAA server 220 based on the provided address information, and presents the portal page of the Home-AAA server 220 to the user terminal 100. Accordingly, upon the service plan being selected via the portal page, the user terminal proceeds to the settlement processing.

The user terminal 100 determines whether or not the IC card 170 will be used in the settlement of the service fees (S154), and in the case of using the IC card 170, the flow proceeds to the processing of step S156 and executes card processing. On the other hand, in the case of not using the IC card 170, the user terminal 100 executes the usage registration processing to proceed to step S158. If proceeding to step S156, the user terminal 100 executes the settlement processing using electronic money service information of the IC card 170 between the Home-server 220. At this time, the Home-AAA server 220 directly accesses the IC card 170 via the user terminal 100 to write authentication information such as card authentication, settlement of the fee, the user ID, and password and the like.

On the other hand, if proceeding to step S158, the user terminal 100 obtains the input of the credit card number or the like to users, and registers the user to the Home-AAA server 220, using the input information thereof. Note that an option remains for using the credit card at the settlement processing. This is in order to deal with cases wherein the balance of electronic money in the IC card 170 decreases suddenly, or especially, the user wants a credit card transaction. Of course, if the credit transaction is selected, the user has to manually input, and the burden of the user increases at that time, but the advantages of improved convenience to the user are very great.

Now, the user registration is executed by way of the settlement in step S156 or step S158, and upon authentication information from the Home-AAA server 220 being provided, the user terminal 100 writes provided authentication information to the IC card 170 (S160). However, in the case of the card processing, as described above, the user terminal 100 serves as an intermediary on the write processing of authentication information by the Home-AAA server 220. Next, if starting of the service usage by the user is requested, the user terminal 100 reads out authentication information from the IC card 170, and executes authentication processing to the Home-AAA server 220 to obtain connection permission of the network (S162). As a result, the user can receive providing of the network connection service via the user terminal 100.

As mentioned above, processing by the user terminal 100 has been described. As described above, the user terminal 100 executes settlement processing using electronic money service information of the IC card 170, and writes authentication information issued according to the settlement processing thereof. Furthermore, the user terminal 100 executes user authentication using authentication information written to the IC card 170, and connection to the wide area network 50 via the Home-AAA server 220 will be realized. In addition, with the example in Fig. 7, an innovation for combining the credit card transaction by way of complementing the settlement processing by the IC card 170 is proposed.

With such a configuration, the user can start a network connection without manual input of most information. Furthermore, even users who have no credit cards can use the network connection service using electronic money service of the IC card 170. Note that, with the above description, all authentication information has been described as being written to the IC card 170, for example, but an arrangement may be made so as to write parts of information for the network connection, to storage in the user terminal 100. Also, a configuration may be made for the user terminal 100 to hold the authentication information read out from the IC card 170 for a predetermined period of time.

### 2-4-2: Processing at Wireless Base Station and Proxy-AAA Server

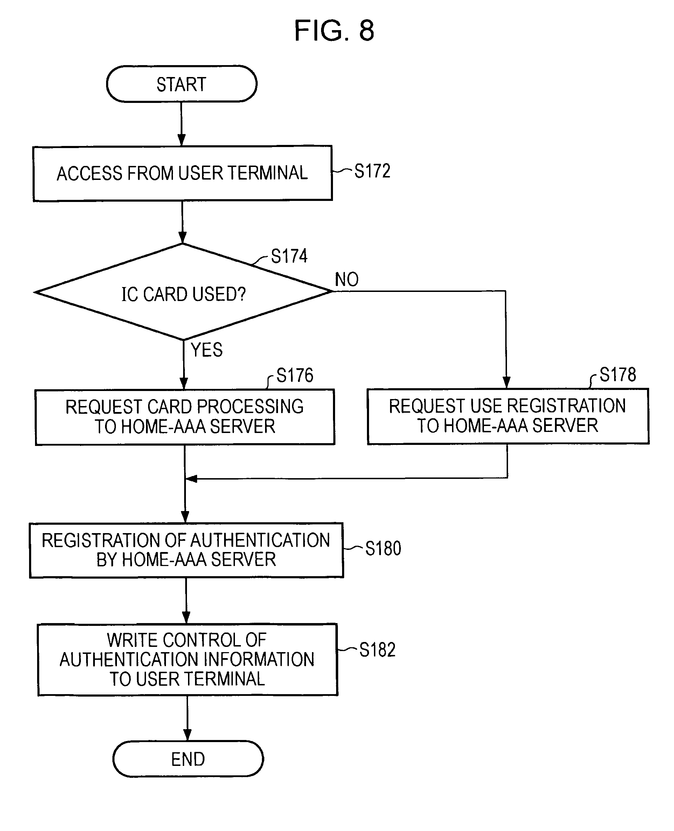

Next, a description will be made of the flow of the processing by the wireless base station 200 and Proxy-AAA server 210, with reference to Fig. 8. Fig. 8 is an explanatory diagram for illustrating a flow of the processing by the wireless base station 200 and Proxy-AAA server 210.

As shown in Fig. 8, an access from the user terminal 100 to the wireless base station 200 occurs (S172), and a portal page of the Home-AAA server 220 is presented to the user terminal 100. At this time, determination is made whether the IC card 170 will be used for the settlement processing or not, based on information transmitted to the Proxy-AAA server 210 from the user terminal 100 to the wireless base station 200 (S174). If the IC card 170 is used for the settlement processing, the Proxy-AAA server 210 proceeds to the processing of step S176, and transmits the card processing request to the Home-AAA server 220 (S176).

On the other hand, if the IC card 170 is not used for the settlement, the proxy-AAA server 210 proceeds to the processing of step S178, and requests user usage registration by a credit card or the like to the Home-AAA server 220 (S178). At this time, the Proxy-AAA server 210 provides information such as credit card numbers transmitted from the user terminal 100 to the Home-AAA server 220.

If the settlement is completed by the processing of step S176 or step S178, and authentication information is provided from the Home-AAA server 220 (S180), the Proxy-AAA server 210 provides provided authentication information via the wireless base station 200 to the user terminal 100 (S182). At this time, a write control of authentication information as to the user terminal 100 by the Proxy-AAA server 210 will be executed.

Thus, the flow of the processing by the wireless base station 200 and Proxy-AAA server 210 has been described.

### 2-4-3: Processing at Home-AAA server

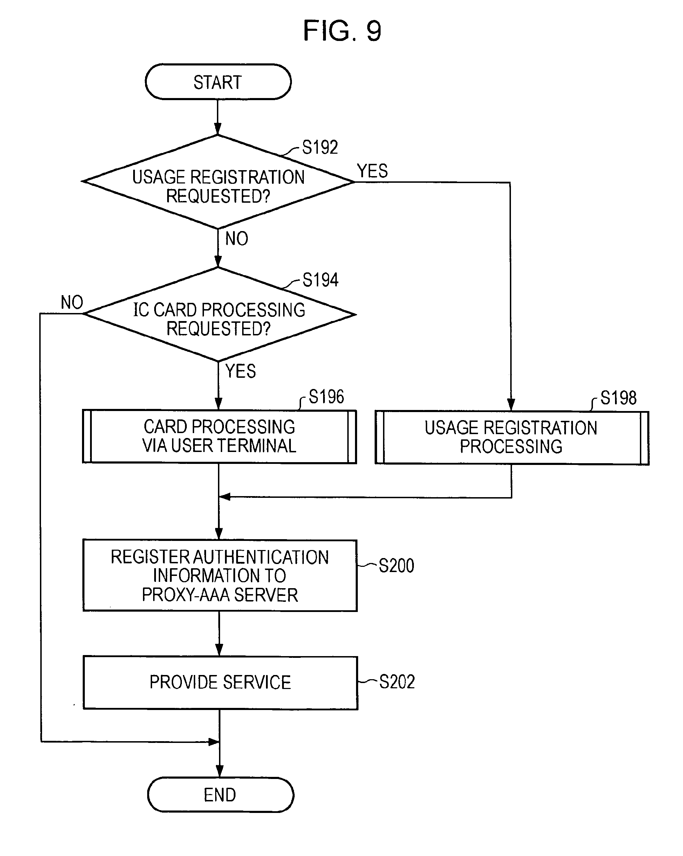

Next, a description will be made of the flow of the processing by the Home-AAA server 220 with reference to Fig. 9. Fig. 9 is an explanatory diagram for illustrating a flow of the processing by the Home-AAA server 220.

The Home-AAA server 220 makes a decision whether the request received from the Proxy-AAA server 210 is the usage registration request or not (S192). If the usage registration request is received, the Home-AAA server 220 proceeds to step S198 and executes the usage registration processing by the credit card or the like (S198). In step S192, if the request received from the Proxy-AAA server 210 is not a usage registration processing, the Home-AAA server 220 proceeds to the processing of step S194, and makes a decision whether the request is the IC card processing request or not (S194).

As a result of the decision in step S194, in the case that the request received from the Proxy-AAA server 210 is the IC card processing request, the Home-AAA server 220 proceeds to the processing of step S196. On the other hand, if the request received from the Proxy-AAA server 210 is not the IC card processing request, the Home-AAA server 220 executes an error processing to end the series of processing relating to the user registration and settlement processing. In step S196, card processing is executed via the user terminal 100, by the Home-AAA server 220 (S196). At this time, the Home-AAA server 220 accesses the IC card 170, and updates electronic money information service information to execute settlement processing of the connection fee.

If the settlement processing is completed in step S196 or step S198, the Home-AAA server 220 issues authentication information and registers it to the Proxy-AAA server 210 (S200). The Proxy-AAA server 210 having received the registration of authentication information by the Home-AAA server 220 provides authentication information to the user terminal 100 and controls the user terminal 100 to write authentication information to the IC card 170.

Upon starting operation of the network connection service by the user having been executed, the user terminal 100 reads out authentication information from the IC card 170, and tries authentication processing to the Home-AAA server 220, using authentication information thereof. The Home-AAA server 220 executes authentication processing by authentication information input from the user terminal 100, and starts connection service to the wide area network 50, if authentication succeeds.

Thus, description has been made of the flow of processing according to the Home-AAA server 220. Thus, the settlement processing and authentication processing is executed between the Home-AAA server 220 and IC card 170 via the user terminal 100. At that time, electronic money service information stored in the IC card 170 is used. Accordingly, authentication information provided from the Home-AAA server 220 along with the completion of the settlement is stored in the IC card 170. Therefore, the user can use the service, just by holding the IC card 170 up to the reader/writer 104, at the time of attempting network connection again after the user has temporarily disconnected from the network connection.

Thus, a description has been made of the network connection service providing system of the present embodiment, regarding a flow of the processing up to starting of the system and network connection. As described above, applying the system according to the present embodiment enables greatly reducing the operations to be performed by users, up to starting of the network connection. Furthermore, network connection service can be provided to users who have no credit cards. Moreover, this enables preventing of eavesdropping and leakage of personal information or the like, even in public spaces.

### 3: Modification 1 (Configuration in Which Authentication System / Settlement System are Separated)

Here, a description will be made regarding a modification of the present embodiment. The present modification is a reconstruction of the system, so as to distinguish the main entity of authentication processing and the main entity of settlement processing in the network connection service system of the present embodiment described above. It should be noted that, to which serves the main entity of authentication processing and the main entity of settlement processing will be assigned, can be changed arbitrarily within a range nor departing from the technical scope of the present embodiment. It goes without saying that a system configuration subjected to such a change also belongs to the technical scope of the present modification.

### 3-1: System Configuration of Network connection Service Providing System

In the description made so far, the Home-AAA server 220 provides a main function according to authentication processing and settlement processing, and accordingly the flow of each processing has not been distinguished clearly, and the technical features of the present embodiment might have been somewhat hard to distinguish. Accordingly, in the present modification, as shown in Fig. 10, configuration of the network connection service providing system configured of the user terminal 100, IC card 170, wireless base station 200, authentication system 310, and settlement system 320, will be exemplarily illustrated. Hereinafter, a system configuration of the network connection service providing system according to the present modification will be described with reference to Fig. 10.

The configuration of the user terminal 100, IC card 170, and wireless base station 200 shown in Fig. 10 is substantively same as the configuration of the user terminal 100, IC card 170, and wireless base station 200 included in the network connection service providing system shown in Fig. 5. However, with the present modification, functions of the Proxy-AAA server 210 and Home-AAA server 220 have been reconstructed to the functions of an authentication system 310 and settlement system 320. Therefore, description will be primarily made regarding the configuration of the authentication system 310 and settlement system 320, and a brief description will be made of the user terminal 100, IC card 170, and wireless base station 200.

### Authentication System 310

First, description will be made of the authentication system 310. The authentication system 310 serves to execute processing relating to authentication that users perform, at the start of the network connection service. At the time of starting of the network connection service, authentication processing that users should perform, for example, is user authentication to be performed at the time of the authentication system 310 permitting the connection to the wide area network 50. This user authentication is executed using authentication information provided by the user beforehand. Additionally, providing authentication information to the user is a role of authentication system 310. Thus, authentication system 310 has issuance function of authentication information.

In addition, at the time of issuing authentication information, authentication system 310 requests users to provide user information for identifying the user. In the event of receiving providing of user information by users, authentication system 310 issues providing authentication information to users and stores along with user information. Accordingly, receiving connection request to the wide area network 50 along with user information and authentication information from user, the authentication system 310 executes authentication processing, by matching storing user information and authentication information with the user information and authentication information obtained by users. Upon authentication being established, the authentication system 310 permits the user terminal 100 to connect to the wide area network 50, and starts providing of the network connection service.

Also, the authentication system 310 is connected to the settlement system 320. The authentication system 310 requests the settlement processing of connection fees to the settlement system 320. With the system configuration according to the present modification, the authentication system 310 does not perform settlement processing by itself, but relegates the settlement processing to the settlement system 320. Thus, relating to the settlement processing, the authentication system 310 plays a role for providing user information and so forth obtained from the user terminal 100 to the settlement system 320, and providing a transmission path to the user terminal 100 through the wireless base station 200. Upon receiving the settlement completion notice to the effect that settlement has been completed by the settlement system 320, the authentication system 310 issues authentication information.

Also, the authentication system 310 performs presentation of a portal page to the user terminal 100. For example, in the event of receiving an access from the user terminal 100 through the wireless base station 200, the authentication system 310 presents the portal page including what sort of the service which it provides. As for the portal page, a selection page of service plans, such as shown in Fig. 10 is illustrated as an example. In the event that users desire to receive the network connection service, information users should select, in addition to the service plan given here, includes for example, the kind of service provider, settlement method, and so forth. Additionally, as for the configuration of the service plan, combinations of service usage period, connection fees, line speed, and so forth, can be conceived. Thus, a selection menu and selection form for selecting usage conditions, are provided in the portal page.

However, in the case of the present modification, an arrangement may be made wherein a part or all above usage conditions are written in the IC card 170, so as to be automatically transmitted to the authentication system 310 from the user terminal 100, at the time of holding the IC card 170 up to the reader/writer 104. Originally, holding IC card 170 up to the reader/writer 104 starts an access to the wireless base station 200 by the user terminal 100. Thus, if appropriate, information is written in the IC card 170, providing can be performed at the timing that the user terminal 100 accesses to the wireless base station 200. Data structure within the IC card 170 is as described above, with reference to Figs. 4A and 4B. However, various kinds of information can be written in the IC card 170, other than information shown in Figs. 4A and 4B.

Electronic money service information, connection setting information, and user information has been described as being written in the IC card 170 in the example in Figs. 4A and 4B. In addition, in configuration described was such that the service usage information is written to the IC card 170 when the settlement processing has completed. Electronic money service information is a kind of monetary information which has monetary value, and information that can be read or rewritten at the stage of the settlement by the settlement system 320. Therefore, electronic money service information is information which should be controlled strictly, so not to be rewritten easily by others. Thus, card authentication is executed when accessing the electronic money service information. The processing of card authentication is executed through an encrypted transmission path between the IC card 170 and the settlement system 320 via the user terminal 100. Accordingly, the electronic money service information, and commands and data for rewriting, are encrypted and transmitted, so as to avoid eavesdropping and tampering.

Now, the main information which the user terminal 100 reads out from the IC card 170 and uses, at the time of accessing the wireless base station 200, is connection setting information and user information. As described above, connection setting information is address information for accessing the authentication system 310 of the service provider. If multiple service providers exist, multiple connection setting information are sometimes written in the IC card 170.

Additionally, if multiple sets of connection setting information are written, order of priority is sometimes set for the connection setting information. In this case, the user terminal 100 reads out high priority connection setting information from the IC card 170, and accesses the authentication system 310 which the read out connection setting information indicates via the wireless base station 200. In the event that an access thus occurs to the wireless base station 200 from the user terminal 100, as described above, a portal page is presented from the authentication system 310.

Furthermore, if information of the service plan which the user desires to select, is written in the IC card 170, the user terminal 100 reads out information of the service plan from the IC card 170, and transmits to authentication system 310 at the time of accessing to the wireless base station 200. For example, information of service plan which comes first, such as the period of "one day", price of "30 dollars or lower", and line speed of "10 Mbps or faster" or the like, can be written to the IC card 170. For example, upon information of such a service plan being transmitted to authentication system 310, the service plan which matches the conditions is automatically selected and only a confirmation form P3 for confirming what sort of selection has been made, is displayed to the user terminal 100. Once confirmation by the user is completed, procedures proceed to the settlement processing.

In this way, authentication system 310 executes user registration and user authentication, based on information written in the IC card 170. Thus, users can complete user registration and user authentication, just by holding the IC card 170 up to the reader/writer 104. Note that, in the above description, user information is stored beforehand to the IC card 170, but this arrangement may be changed so that the authentication system 310 generates user information, after receiving an access by the user terminal 100. For example, in the case of a system wherein users are managed with different user IDs for each service provider, an arrangement is preferable wherein user information is generated by the authentication system 310 of each service provider.

Now, information exchange between the authentication system 310 and user terminal 100 is held through the wireless base station 200. The wireless transmission path, which is capable of communicating, based on a standard such as WiMAX, connects between the user terminal 100 and the wireless base station 200. The authentication system 310 controls the wireless base station 200 and realizes information communication between the user terminal 100 over the wireless transmission path. Note that, with the network connection service providing system according to the present modification, the wireless base station 200 executes data processing and signal processing such as encrypting/decrypting of the data transmitted over the wireless transmission path, modulation/demodulation of the encrypted data, and gain control or the like. However, this arrangement may be modified so as to execute a part or all processing of the data processing and signal processing thereof at the authentication system 310.

### Settlement System 320

Next, a description will be made of the settlement system 320. The settlement system 320 serves to execute the settlement processing relating to connection fee to the network, when authentication information is issued by authentication system 310. Specially, the settlement system 320 according to the present modification uses electronic money service information of the IC card 170 being held up to the reader/writer 104 of the user terminal 100, and executes the settlement processing of connection fees. At this time, an encrypted and secure transmission path connects between the settlement system 320 and the IC card 170. Therefore, the electronic money service information of the IC card 170, and also the read-out and write commands, data for rewriting, and information for card authentication and the like, for the electronic money service information, is not subject to eavesdropping or tampering at the authentication system 310 or the like.

Now, the settlement system 320 accesses the IC card 170 via the user terminal 100 in the case of receiving the settlement request of connection fee from the authentication system 310. Next, the settlement system 320 obtains information for card authentication stored in the IC card 170 via the user terminal 100, and executes card authentication with the IC card 170. If card authentication succeeds, the settlement system 320 uses the electronic money service information of the IC card 170, and makes settlement of connection fees, for the amount regarding which a request has been received from the authentication system 310. Attention should be directed to the point that, at this time, actual rewriting of electronic money service of the IC card 170 is performed by the user terminal 100 connected to the reader/writer 104. If the settlement processing is completed, the settlement system 320 transmits a settlement completion notice to the effect that the settlement processing has been completed, to the authentication system 310.

Upon receiving the settlement completion notice from the settlement system 320, the authentication system 310 manages user information and authentication information in a correlated manner, to provide authentication information thereof to the user terminal 100. Authentication information provided to the user terminal 100 is written to the IC card 170. With the present modification, the fee settlement and user registration are executed in this way. Note that writing authentication information to the storage medium of the user terminal 100 for control can be performed, but writing authentication information to the IC card 170 is preferable, taking into consideration the usage of other user terminals 100. This point will be described in detail later.

Upon having completed the processing so far, the user can receive the network connection service, just by holding the IC card 170 up to the reader/writer 104. Thus, the trouble of manual input of credit card numbers and personal numbers and the like is done away with, so the user's convenience is greatly improved. Additionally, when disconnecting network connection and executing network connection again, all the user has to do is to hold the IC card 170 up, and the trouble of manual input of the user ID and password can be omitted.

Further, the user terminal 100 automatically starts applications such as the browser P1, based on information of the IC card 170, which enables users to prepare the usage environment just by the action of holding up the IC card 170. Fee settlement will be executed using electronic money service information of the IC card 170, so users who have no credit cards can receive the service.

Thus, a description has been made of a system configuration of the network connection service providing system. Hereinafter, a description will be made of the function configuration of the user terminal 100 which handles access to the IC card 170 which is important in realizing the system configuration according to the present modification, and furthermore, regarding the overall processing flow executed with the system of the present modification.

### 3-2: Function Configuration of User Terminal

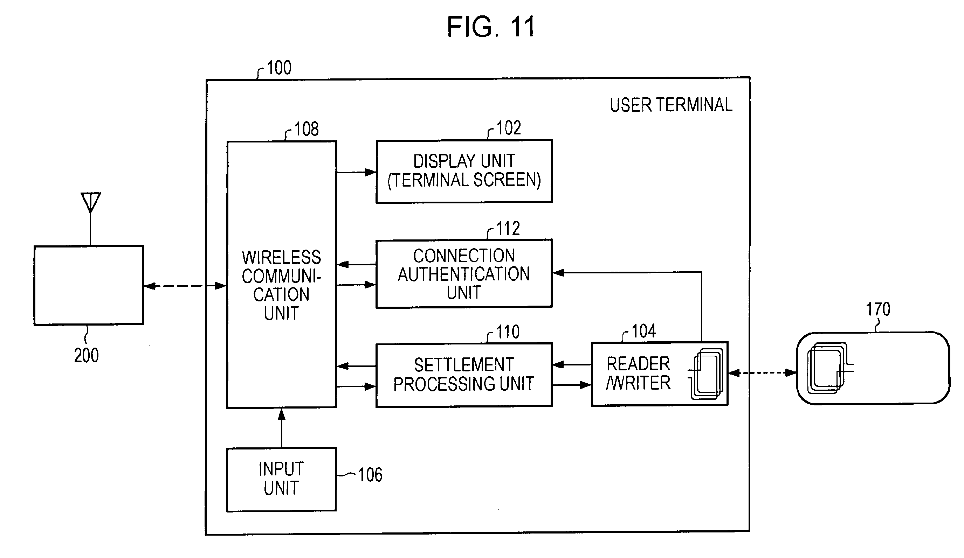

First, a description will be made the function configuration of the user terminal 100 according to the present modification, with reference to Fig. 11. Fig. 11 is an explanatory diagram illustrating a function configuration example of the user terminal 100 according to the present modification.

The user terminal 100 has, mainly, the display unit (terminal screen 102), the reader/writer 104, the input unit 106, the wireless communication unit 108, settlement processing unit 110, and connection authentication unit 112, as shown in Fig. 11. However, the terminal screen 102, reader/writer 104, and input unit 106 can be externally connected to the user terminal 100.

Also, though not shown, storage for storing data which the settlement processing unit 110 and connection authentication unit 112 deal with is provided in an actual arrangement. Furthermore, storage storing a control program for controlling each component which the user terminal 100 has, are provided. Note that functions of the settlement processing unit 110 and connection authentication unit 112 can be provided based on programs stored in the ROM (Read Only Memory) 904, RAM (Random Access Memory) 906, storage unit 920, removable storage medium, external-connection equipment 930, by a CPU (Central Processing Unit) 902, in the hardware configuration example described later.

### Terminal Screen 102

First, a description will be made regarding the terminal screen 102. The terminal screen 102 includes the display unit of the user terminal 100. Examples of the terminal screen 102 include an LCD (Liquid Crystal Display), ELD (ElectroLuminescence Display), CRT (Cathode Ray Tube), PDP (Plasma Display Panel), and so forth. The start screen of the browser P1 and confirmation form P3 are displayed on the terminal screen 102 (see Fig. 10). It goes without saying that start screen of the operating system and graphical user interface (hereinafter referred to as "GUI") or the like are displayed on the terminal screen 102.

### Reader/Writer 104

Next, a description will be made of the reader/writer 104. The reader/writer 104 serves to read and write information stored in the IC card 170 by the non-contact communication. The reader/writer 104 has a circuit configuration such as shown in Fig. 24B, for example. Accordingly, the reader/writer 104 supplies electric power to the IC card 170, transmits commands, and receives response data to the command from the IC card 170, using electromagnetic coupling by an induction field generated with a loop antenna. There are cases that the reader/writer 104 is built in within the housing of the user terminal 100, but also cases of being externally connected via a Universal Serial Bus (hereinafter referred to as "USB") terminal or the like. In either case, a system according to the present modification can be applied.

### Input Unit 106

Next, a description will be made of the input unit 106. The input unit 106 serves as an operation input unit which users use for manually input of information. Examples of the input unit 106 include, for example, various kinds of input devices such as a keyboard, mouse, trackball, touch-pad, touch panel, manual operation button, control lever, remote control, or the like. For example, a portal page of the authentication system 310 is displayed on the terminal screen 102, and upon being prompted to select a service plan, users operate the input unit 106 and select the desired service plan. In addition, the confirmation form P3 is displayed on the terminal screen 102, and the user presses the GUI button (OK) for indicating an intention of ending confirmation, provided to the confirmation form P3, by the operation of the input init 106. Such a user operation is notified to the wireless communication unit 108 via the input unit 106.

### Wireless communication unit 108

Next, a description will be made of the wireless communication unit 108. The wireless communication unit 108 serves as, for example, a communication unit for realizing wireless communication between the wireless base station 200, based on a standard such as WiMAX. For example, the wireless communication unit 108 receives information of the portal page transmitted via the wireless base station 200, and displays information thereof to the terminal screen 102. Accordingly, if the GUI button of the portal page or the like is pressed by the user, and a notice of the user operation is input from the input unit 106, the wireless communication unit 108 wirelessly transfers information of the user operation to the wireless base station 200 as appropriate. Furthermore, the wireless communication unit 108 wirelessly transfers information input from the settlement processing unit 110 and connection authentication unit 112 to the wireless base station 200 as appropriate. Moreover, the wireless communication unit 108 inputs information transmitted from the wireless base station 200 to the terminal screen 102, connection authentication unit 112, and settlement processing unit 110.

### Settlement Processing Unit 110

Next, a description will be made of the settlement processing unit 110. The settlement processing unit 110 serves to control the reader/writer 104 to read out information from the IC card 170, and to write information in the IC card 170, to realize user registration and fee settlement using the IC card 170. Accordingly, the settlement processing unit 110 inputs information read out from the IC card 170 to the wireless communication unit 108, and transmits to the authentication system 310 and settlement system 320 via the wireless base station 200. In addition, the settlement processing unit 110 reads out and rewrites information of the IC card 170, based on information received from the authentication system 310 or settlement system 320 via the wireless base station 200, and writes information to the IC card 170.

Here, a description will be made of function configuration of the settlement processing unit 110, along with a flow of the processing which the settlement processing unit 110 executes, when the users performs user registration and fee settlement. First, the user holds the IC card 170 up to the reader/writer 104, and the settlement processing unit 110 recognizes the existence of the IC card 170 through the reader/writer 104. Next, the settlement unit 110 controls the reader/writer 104 to refer to information stored in the IC card 170, and confirms existence or non-existence of the service usage information (see Figs. 4A and 4B). If there is the service usage information, it can be deemed that the user has made a user registration before, using the IC card 170. However, we will examine a case here in which there is no service usage information.

If the service usage information is not stored in the IC card 170, the settlement processing unit 110 reads out connection setting information from the IC card 170 via the reader/writer 104. Furthermore, the settlement processing unit 110 reads out user information from the IC card 170 via the reader/writer 104. Upon having read out such information from the IC card 170, the settlement processing unit 110 accesses the wireless base station 200 via the wireless communication unit 108, and provides user information to the authentication system 310 corresponding to connection setting information, so as to request user registration processing.

Upon user registration processing having been requested, a portal page is presented from the authentication system 310 via the wireless base station 200, and is displayed on the terminal screen 102. For example, if the user selects the service plan, information of the user operation from the input unit 106 is input to the wireless communication unit 108, and transmitted to authentication system 310 via the wireless base station 200.

As described above, authentication system 310 is not for executing the settlement processing. Thus, if information of the user operation is input to the authentication system 310, usage fees of the service plan corresponding to information of the user operation from authentication system 310 are notified to the settlement system 320, and settlement of the usage fee is requested.

In this way, upon receiving a settlement request for usage fees, the settlement system 320 accesses to the user terminal 100 via the wireless base station 200, and executes card authentication as to the IC card 170. At this time, the settlement processing unit 110 determines whether access to electronic money service information of the IC card 170 is permitted or not, based on the card authentication information provided from the settlement system 320.

If card authentication succeeds, the settlement system 320 requests to make an electronic charge of the electronic money service information of the IC card 170, of an amount of the usage fee notified from authentication system 310. The user terminal 100 obtains this charge request by the wireless communication unit 108 via the wireless base station 200, and inputs to the settlement processing unit 110.

The settlement processing unit 110 accesses to electronic money service information of the IC card 170 via the reader/writer 104, and rewrites the electronic money service information, so as to decrease the credit of electronic money service information by the amount specified with the charge request. Upon rewriting processing of electronic money service information being completed, the settlement processing unit 110 accesses the wireless base station 200 via the wireless communication unit 200, and transmits a completion notice to the settlement system 320 via the wireless base station 200.

Upon the completion notice being received from the settlement system 320, the settlement completion notice is input from the settlement system 320 to the authentication system 310. Accordingly, authentication information is issued, and managed in a manner correlated with user information by the authentication system 310, and also authentication information thereof is provided to the user terminal 100 through the wireless base station 200. Authentication information provided to the user terminal 100 is received from the wireless communication unit 108 and input to the settlement processing 110.

Additionally, this authentication information is input to and held at the connection authentication unit 112 as appropriate. Authentication information input to the settlement processing unit 110 is stored in the IC card 170 via the reader/writer 104. In this way, using authentication information stored in the connection authentication unit 112 or the IC card 170 enables users to connect to the wide area network 50 via the authentication system 310. Up to here, what sort of processing the settlement processing unit 110 performs relating to the user registration and fee settlement has been described.

### Connection Authentication unit 112

Next, a description will be made of connection authentication unit 112. The connection authentication unit 112 serves to execute user authentication, using authentication information obtained from authentication system 310 by function of the settlement processing unit 110. At the time of starting the network connection, the authentication unit 112 reads out authentication information stored in the IC card 170 via the reader/writer 104. The connection authentication unit 112 then inputs authentication information read out from the IC card 170 via the reader/writer 104 to the wireless communication unit 108, and transmits to the authentication system 310 via the wireless base station 200.

At this time, the connection authentication unit 112 transmits a connection start request, which requests starting of the network connection, to the authentication system 310. The authentication system 310 executes user authentication, using authentication information received from the user terminal 100, and if authentication succeeds, starts the network connection service to the user terminal 100 according to the connection starting request. However, in the event that the connection authentication unit 112 holds the authentication information, the authentication information that is held is used.

Thus, description has been made of the function configuration of the user terminal 100. As described above, the settlement processing used electronic money service information of the IC card 170 is enabled by the function of the settlement processing unit 110 at the user terminal 100, and furthermore, user operation relating to the user authentication is simplified by the function of the connection authentication unit 112. As a result, the trouble of manually inputting credit card numbers and personal information and the like can be omitted, and also users who have no credit cards can be provided with the network connection service.

### 3-3: Overall Processing Flow up to Starting of the Service Usage (If User Unregistered)

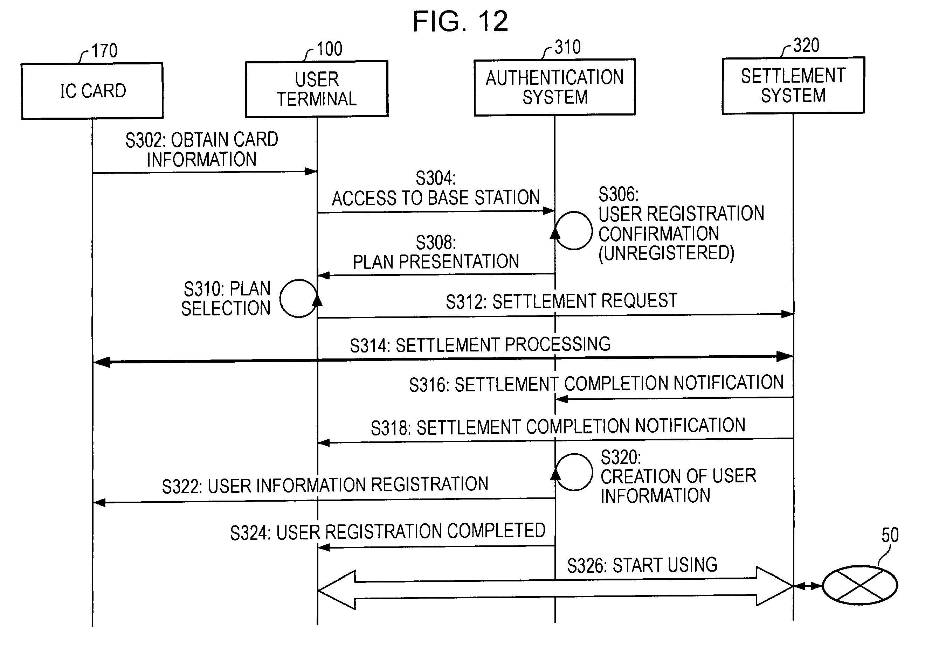

Here, a description will be made of overall processing flow up to starting of the service usage, relating to the network connection providing system according to the present modification, with reference to Fig. 12. However, only the overall processing flow up to starting of the service usage will be described here. Fig. 12 is an explanatory diagram for illustrating the overall processing flow up to starting of the service usage.

As shown in Fig. 12, upon holding the IC card 170 up to the reader/writer 104, information of the IC card 170 is obtained by the user terminal 100 (S302). At this time, connection setting information and user information stored in the IC card 170 is read out by the user terminal 100. Once information of the IC card 170 is read out, the user terminal 100 accesses to the authentication system 310 via the wireless base station 200 (S304). At this time, user information is provided from the user terminal 100 to authentication system 310. With authentication system 310, whether user registration has been performed or not, is confirmed, based on the user information provided from the user terminal 100 (S306). With the example in Fig. 12, it is confirmed that the user is in the unregistered state.

If the user is unregistered, the authentication system 310 presents a portal page for selecting a service plan, to the user terminal 100 (S308). Upon having received presentation of the portal page from authentication system 310, the user terminal 100 displays the portal page on the terminal screen 102 and awaits selection operation of the plan by the user (S310). If a plan is selected by the user, the user terminal 100 presents information of the selected plan to the authentication system 310 via the wireless base station 200, and requests the settlement system 320 for settlement of usage fees via the authentication system (S312). At this time, a settlement request for usage fees corresponding to the selected plan is transmitted from the authentication system 310 to the settlement system 320.

Upon receiving the settlement request of usage fee, the settlement system 320 accesses to the IC card 170 via the user terminal 100, and after executing card authentication, executes the settlement processing, using electronic money service information of the IC card 170 (S314). If the settlement processing by the IC card 170 is completed, the settlement system 320 transmits settlement completion notice to the authentication system 310 and user terminal 100 (S316 and S318). The authentication system 310 which has received the settlement completion notice generates authentication information for user authentication, to be used at the time of network connection by the user (S320). The authentication system 310 then provides authentication information to the user terminal 100 to inform of the completion of the user registration (S324), and also requests for writing to the IC card 170 (S322).

After authentication information is written, the user terminal 100 reads out authentication information to execute user authentication when the IC card 170 is held up to the reader/writer 104, and the network connection service is provided by the authentication system 310 (S326). Note that with the example in Fig. 12, there is a flow of a processing wherein authentication information is written to the IC card 170, but an arrangement may be made wherein, once authentication information is held in the user terminal 100, service can be received using the authentication information thereof. However, assuming a case of the same user using other user terminals 100, it is preferable to employ the writing of authentication information to the IC card 170, and reading out and using the authentication information from the IC card 170, at the time of starting the service providing, as shown in Fig. 12.

### 3-3-1: Processing at User Terminal

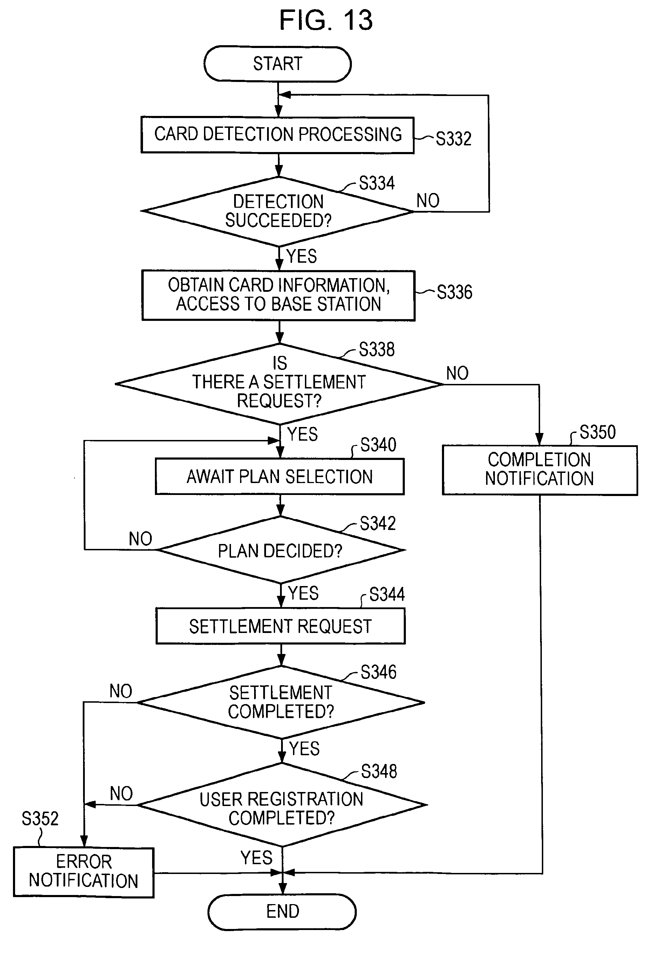

Next, a brief description will be made of processing which the user terminal 100 of the present modification executes, with reference to Fig. 13. Fig. 13 is an explanatory diagram for illustrating a flow of the processing wherein the use terminal 100 of the present modification executes.

First, the user terminal 100 executes card detection processing for detecting whether the IC card 170 has been held up to the reader/writer 104 or not (S332). As the card detection processing, for example, a polling command is transmitted from the reader/writer 104, and processing for detecting response is performed by the IC card 170. Accordingly, the user terminal 100 determines whether the IC card 170 has been detected by the card detection processing (S334). If the card detection processing succeeds, the user terminal 100 proceeds to the processing of step S336. On the other hand, if the card detection processing fails, the user terminal 100 proceeds to the processing of step S332 again, and executes the card detection processing repeatedly.

Upon proceeding to step S336, the user terminal 100 obtains card information from the IC card 170 detected by the card detection processing, and accesses the authentication system 310 via the wireless base station 200 (S336). At this time, user information read out from the IC card 170 is transmitted to the authentication system 300, and whether there is user registration or not is determined. In the event that the user is unregistered, a portal page is displayed to the user terminal 100, and selection of the service plan is performed by the user. On the other hand, if the user is registered, this means that authentication information which has a remaining period of validity has been already registered to the IC card 170, so a notice relating to the settlement processing is not transmitted from authentication system 310 to the user terminal 100.

Thus, the user terminal 100 determines whether or not there has been a request (presentation or the like of plan selection page) relating to the settlement, according to what sort of response there has been from authentication system 310 (or settlement system 320) as to the transmitted user information

(S338). If there is a settlement request, the user terminal 100 proceeds to the processing of step S340. On the other hand, if there has been no settlement request, the user terminal 100 proceeds to the processing of step S350, and ends the series of processing by outputting a completion notice (S350).

In the event of proceeding to the processing of step S340, the user terminal 100 requests selection of the service plan to the user, and awaits plan select operation by the user (S340). The user terminal 100 then determines whether the service plan has been decided or not (S342), and if the decision has made, the user terminal 100 proceeds to the processing of step S344, and if the decision has not made continues the stands-by state in step S340.

In the event of proceeding to the processing of step S344, the user terminal 100 transmits information of the decided service plan to authentication system 310, and requests the settlement of the service fee to the settlement system 320 via the authentication system 310 (S344). Accordingly, the settlement processing is executed between the settlement system 320 and the IC card 170 according to the settlement request, via the user terminal 100. The user terminal 100 awaits the settlement completion notice notified from the settlement system 320, and determines whether the settlement has been completed or not (S346).

In the event that the settlement has been completed, the user terminal 100 proceeds to the processing of step S348. On the other hand, if the settlement is incomplete, the user terminal 100 proceeds to the processing of step S352, and notifies an error to the user (S352) to end series of processing. Conceivable examples of a reason why the settlement is incomplete are insufficient electronic money stored in the IC card 170, communication error, or the like.

In the event of proceeding to the processing of step S348, the user terminal 100 determines whether the user registration has been completed or not (S348). Upon completing the settlement processing, the settlement completion notice is transmitted to the authentication system 310 from the settlement system 320, and authentication information is issued at the authentication system 310. This authentication information is maintained in a manner correlated with the user information at the authentication system 310, and also is provided to the user terminal 100 and written to the IC card 170, which completes the user registration. Thus, upon the user registration being completed, the user terminal 100 ends the series of processing. On the other hand, if the user registration has not been completed for some reason, such as a communication error, the user terminal 100 proceeds to the processing of step S352, and notifies the error to the user (S352) to end the series of processing.

So far, a description has been made regarding the flow of processing executed by the user terminal 100.

### 3-3-2: Processing at Authentication System

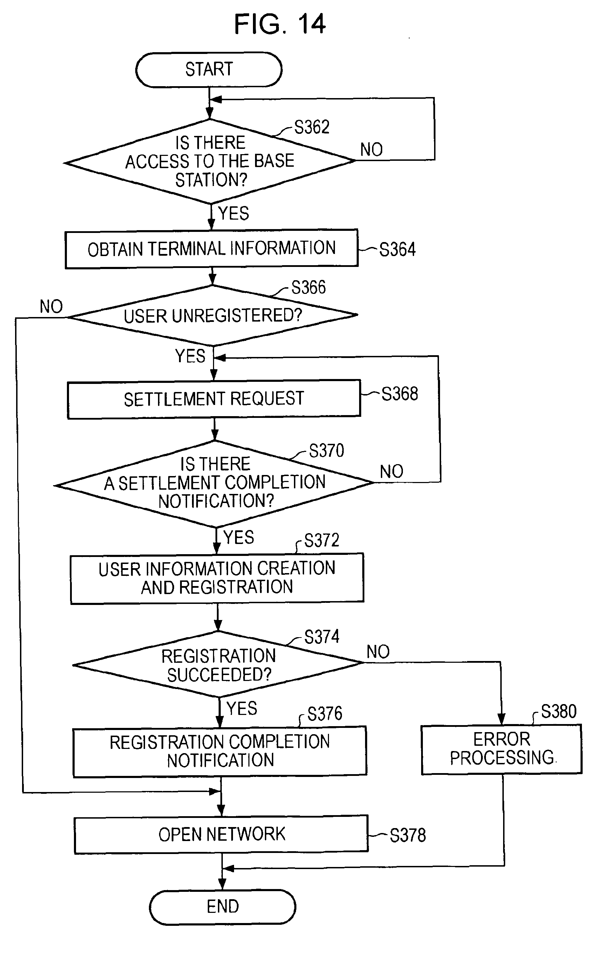

Next, a description will be made of a flow of processing by authentication system 310 of the present modification, with reference to Fig. 14. Fig. 14 is an explanatory diagram for illustrating a flow of the processing by authentication system 310 of the present modification.

The authentication system 310 determines whether there is an access from the user terminal 100 via the wireless base station 200 or not (S362). If there is no access from the user terminal 100, the authentication system 310 repeats the processing of step S362 and awaits access. On the other hand, in the event of received access from the user terminal 100, the authentication system 310 proceeds to the processing of step S364. Upon proceeding to the processing of step S364, the authentication system 310 obtains user information stored in the IC card 170, from the user terminal 100 (S364). At this time, the authentication system 310 can also obtain terminal information unique to the user terminal 100.

Upon having obtained user information, the authentication system 310 determines whether the user registration exists or not, using the obtained user information (S366). If the user is unregistered, the authentication system 310 proceeds to the processing of step S368. On the other hand, if the user is registered, the authentication system 310 proceeds to the processing of step S378, and opens the network (S378), to end the series of the processing. If proceeding to the processing of step S368, the authentication system 310 requests selection of the service plan to the user terminal 100, and also requests settlement of usage fees correspond to the selected service plan to the settlement system 320 (S368). Next, the authentication system 310 determines whether the settlement completion notice has been received from the settlement system 320 or not (S370), and if not received, the authentication system 310 proceeds to the processing of step S368 again, and retransmits the settlement request.

On the other hand, if the settlement completion notice has been received, the authentication system 310 proceeds to the processing of step S372. Upon proceeding to the processing of step S372, the authentication system 310 generates authentication information for using the user authentication of the user terminal 100, and holds the authentication information in a manner correlated with the user information (S372). Furthermore, the authentication system 310 provides the generated authentication information to the user terminal 100. Authentication information provided to the user terminal 100 is stored to the IC card 170 via the reader/writer 104, which completes user registration. Thus, the authentication system 310 determines whether the user registration has succeeded or not (S376), and if succeeded, proceeds to the processing of step S376. On the other hand, if user registration has failed, the authentication system 310 proceeds to the processing of step S380, and executes error processing to end the series of processing (S380).

In the event of having proceeded to the processing of step S376, the authentication system 310 provides a registration completion notice indicating the completion of user registration, to the user terminal 100 (S378). Accordingly, the authentication system 310 permits connection of the network according to the user terminal 100 in which the user terminal 100 has completed, and opens the network (S378). If this network open processing has been completed, the authentication system 310 ends the series of processing.

Thus, description has been made of the flow of processing by the authentication system 310 of the present modification.

### 3-4: Overall Processing Flow up to Starting of the Service Usage (If User Registered)

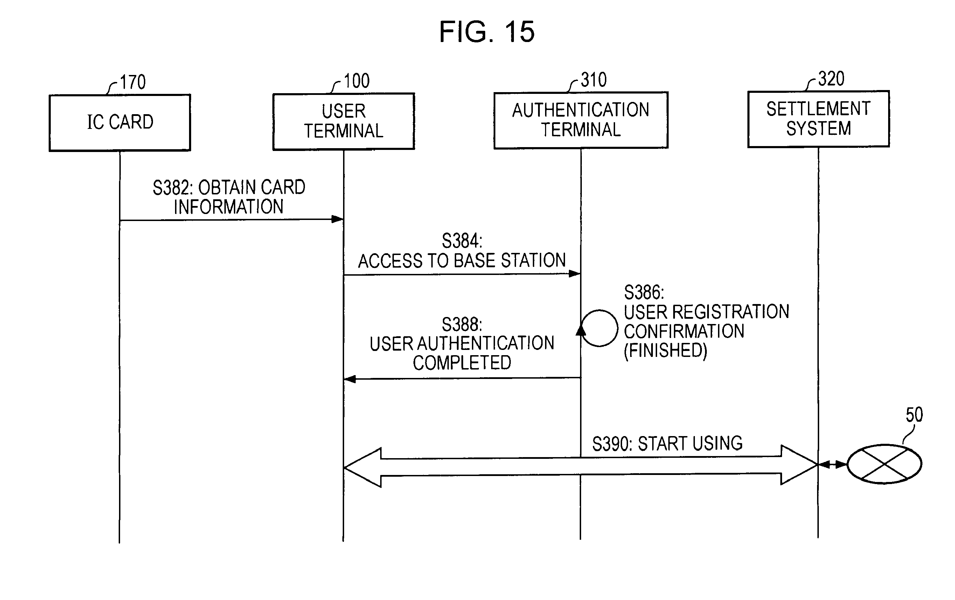

Next, a description will be made of overall processing flow up to starting of the service usage in the event that the user has been registered, with reference to Fig. 15. Fig. 15 is an explanatory diagram for illustrating a flow of the overall processing up to starting of service usage in the event that the user has been registered.

As shown in Fig. 15, first, card information of the IC card 170 is obtained by the user terminal 100 (S382). Next, the user terminal 100 accesses to the authentication system 310 via the wireless base station 200 (S384). At this time, user information which the user terminal 100 has read out from the IC card 170 is provided to the authentication system 310. The authentication system 310 determines whether or not there is user registration, based on user information provided from the user terminal 100 (S386). In the example in Fig. 15, the user is determined to have been registered. In this case, the authentication system 310 notifies the user terminal 100 to the effect that the user authentication has been completed (S388). Upon having completed notice of the user authentication, the user terminal 100 starts network usage, using the authentication information stored in the IC card 170 (S390).

Thus, a description has been made of overall processing flow if the user registration completed. As described above, the settlement processing is not executed if the user registration is completed, and network usage can be performed using authentication information already stored in the IC card 170.

### 3-5: Transfer Method of Service Right

Now, with the network connection service providing system described so far, electronic money service information of the IC card 170 is used for the settlement processing, and also authentication information is written to the IC card 170 upon completion of the settlement processing. Accordingly, after completion of the settlement processing, information relating to the right of the user to use the service is managed at the IC card 170. For example, information of the period over which the service can be used, authentication information to be used for user authentication to use the service, and connection setting information for connecting to the authentication system 310 of the service providers, and so forth, are written to the IC card 170 in a correlated manner. Thus, hereinafter, a description will be made of a system for using such information effectively.

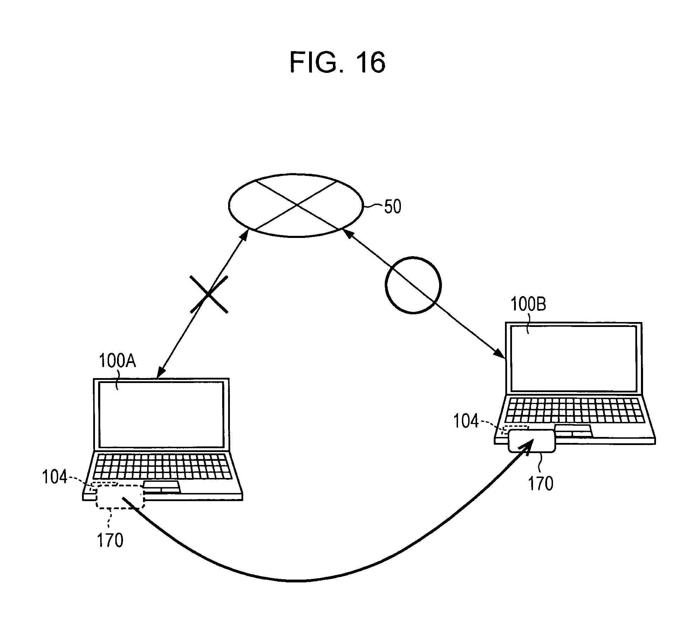

Here, a description will be made of a transfer method of service rights, with reference to Fig. 16. Fig. 16 is an explanatory diagram for schematically illustrating transfer method of service rights. In Fig. 16, two user terminals, 100A and 100B are described. These user terminals 100A and 100B have same function configuration as the user terminal 100 according to the present modification, described above. Note that transfer method of service rights as used here refers to, for example, users executing user registration and fee settlement with the first user terminal 100A, and starting the network connection through the user authentication, after which the network is cut off and the user reconnects by the second user terminal 100B. It goes without saying that this is the same for third, fourth, subsequent user terminals 100.

Transfer of service rights occurs when users have multiple user terminals 100 and temporarily use a user terminal 100 installed at a public space. For example, in the case that a user executes user registration and fee settlement with a personal computer installed in the house, and then executes user authentication with a car navigation system mounted to the car to use the network connection service, the service right has to be transferred. Additionally, with another example, in the case that users execute user registration and fee settlement with a personal computer set in the house, and later, executes user authentication with a personal computer installed at airports or coffee shops or the like to use the network connection service, the service right has to be transferred.

In the present modification, fee settlement by the IC card 170 is a prerequisite, manual input of personal information does not have to be performed, and further, such information which should be kept secret is exchanged over a secure transfer path, so a personal computer or the like installed in a public space is easy to use. Also, the system is for executing fee settlement using electronic money service information of the IC card 170, so the user can replenish the IC card 170 with more electronic money using equipment available at airports or coffee shops or the like, to execute user registration and fee settlement easily. Thus, in the case of a system which uses the arrangement of the present modification, it is predicted that there will commonly be cases of receiving service using user terminals 100 used at public spaces or owned by others, rather than just using the user terminal 100 which the user individually owns.

That is to say, it is predicted that it will not be an unusual situation wherein, user registration, fee settlement, and user authentication, will be executed using user terminals 100 which users themselves do not own, with the users holding just the IC card 170 according to the present modification. Under this situation, a system which can transfer the service right safe and easily, is demanded. To begin with, with the present modification, about the only thing that the users should have to decide is to select the service plan, to start the service. Additionally, if a condition of the service plan to which priority should be given is set, the user does not even have to perform operations to select the service plan.

For example, in the case that conditions of service providers to be selectable, and service plan conditions, electronic money service information, and user information, are written to the IC card 170, user registration and fee settlement are completed simply by users holding the IC card 170 up to the reader/writer 104. Furthermore, an arrangement may be made wherein the user authentication is executed automatically, and service providing is started, after the user registration and fee settlement is completed. In addition, in the case of temporarily cutting off the network and starting the network system again, all users have to do is to hold the IC card 170 up to the reader/writer 104. Accordingly, in the case of transferring the service light and using service with other user terminal 100, all users have to do is to hold the IC card 170 up to the reader/writer 104. At this time, new user registration and settlement processing do not occur, as long as within the expiration date of the service right.

For example, as shown in Fig. 16, a user uses the service holding the IC card 170 up to the reader/writer 104 provided to the first user terminal 100A, temporarily cuts the network connection, and holds the IC card 170 up to the second user terminal 100B. In the authentication system 310, users are managed by managing user information and authentication information in a correlated manner. Additionally, the authentication system 310 enables each user terminal 100 to be identified, using information unique to each of the user terminals 100. Thus, the authentication system 310 can refuse a network connection request from the user terminal 100, at the time of the IC card 170 being held up to the second user terminal 100B. Note that, as for unique information here, for example, there MAC address (Media Access Control address) or the like.

The reason for providing such a system is because there is a possibility that authentication information and user information read out from the IC card 170 still remains in the first user terminal 100A. Using the above system, for example, in the case that a connection request is made, regardless of having starting providing service by holding the IC card 170 up to the second user terminal 100B, a request using the same authentication information and user information from the first user terminal 100 can be refused. Employing such a system enables setting a of service right along with a special agreement that network connection will not be made by a user using multiple user terminals 100A and user terminal 100B at the same time. Additionally, this contributes to prevention of misuse of authentication information and user information.

Thus, with the mode of usage involving a transfer of the service right, the user's operation burden can be reduced by applying the arrangement of the present modification. Note that, the modes of usage are not restricted to those described above. For example, a mode of usage may be conceived such as holding the IC card 170 up to a mobile phone in which is implemented a non-contact communication function and wireless communication function, to execute user registration and fee settlement and receiving of service, by holding the IC card 170 up to information equipment installed at a public space to receive service. Furthermore, another mode of usage may be conceived such as executing user registration and fee settlement with a mobile phone in which is implemented the function of the IC card 170, and receiving the service by holding the mobile phone up to the user terminal 100. Thus, there is a wide variety of modes of usage involving a transfer of the service right, and in many cases, the user's convenience can be greatly improved by applying the arrangement according to the present modification. 3-6: Selection Method in the Case Multiple Service Providers Exist

Next, a brief description will be made of the selection method in the case that multiple service providers exist. As already described, the IC card 170 has stored therein connection setting information for connecting to a portal site of a service provider, or a storage area is provided therein for each service provider, or the like. Thus, the user terminal 100 can automatically select service providers to be accessed, based on information stored in the IC card 170. However, various types of automatic selection can be conceived. For example, an arrangement may be made wherein priority is set for each service provider, and used such that service providers are selected in high-priority order. It goes without saying that an arrangement may be made wherein portal pages of multiple service providers are presented, and selected by the user.

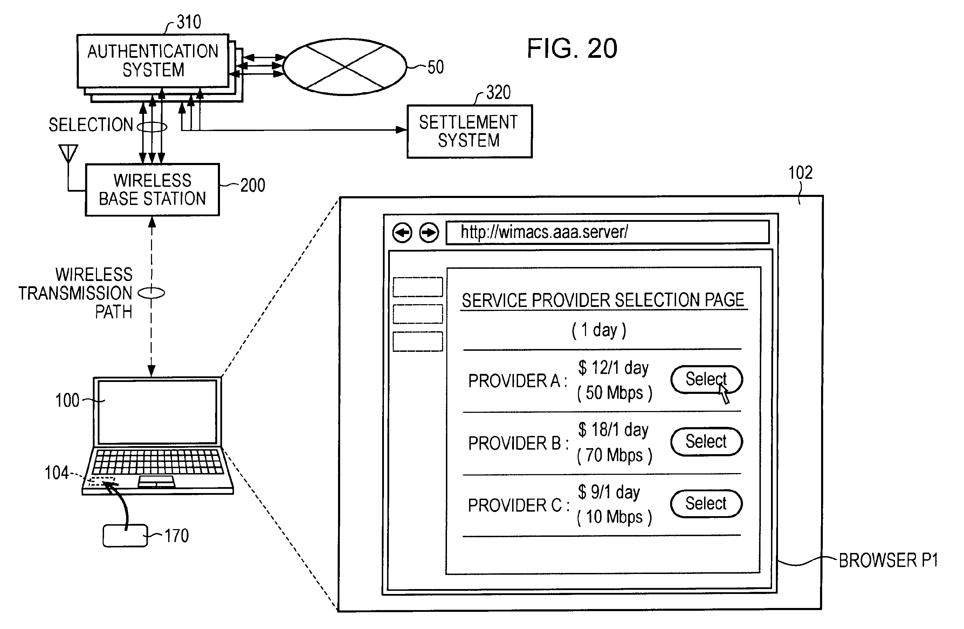

Here, let us consider a case where the service providing conditions shown in Fig. 20 are set for each service provider. We will say that users are assumed to select connection service of a one day period. For example, we will say that the service provider A presents a condition that the usage fee for one day is 12 dollars and the line speed is 50 Mbps. Also, we will say that the service provider B presents a condition that usage fee for one day is 18 dollars and the line speed is 70 Mbps. Further, we will say that the service provider C presents a condition that usage fee for one day is 9 dollars and the line speed is 10 Mbps.

In the case of a system that the user selects manually, the user terminal 100 reads out connection setting information of each service provider stored in the IC card 170 when holding the IC card 170 up to the reader/writer 104, and accesses each service provider to receive presentation of connection conditions. For example, a portal page wherein a connection condition of each service provider is written to the terminal 102 of the user terminal 100, is displayed, and selection operation of service providers by users is prompted. Accordingly, if a selection operation of service providers is executed by the user, the user terminal 100 accesses the authentication system 310 of service providers to execute the user registration and settlement processing. If the user registration and settlement processing have been completed, the network connection service is provided by the selected service provider.

On the other hand, in a system that the service provider is automatically selected, based on information written in the IC card 170, the user terminal 100 reads out information of service providers and information of priority set for each service provider, from the IC card 170 that has been held up. Note that, of the information stored in the IC card 170 shown in Figs. 4A and 4B priority information is stored corresponding to each service provider, as connection setting information or service usage information. Accordingly, priority information may be information which indicates orders of each service providers, or may be information which indicates connection conditions for the service. For example, information indicating the order of service providers is set by a form wherein the service provider A is the first in order, the service provider B is the third in order, and the service provider C is the second in order. On the other hand, information indicating selection conditions of the service is set by a form such as "in order of fast line speed", "in order of inexpensive usage fees", and so on.

For example, if a selection condition of "in order of fast line speed" is set in the IC card 170, the service provider B is preferentially selected in the example in Fig. 20. If a selection condition of "in order of inexpensive usage fees" is set in the IC card 170, the service provider C is preferentially selected in the example in Fig. 20. It goes without saying that if conditions other than these are set, the service provider which matches the condition is automatically selected by the user terminal 100. Such a system is realized by functions of the user terminal 100 which automatically selects the service provider using stored information in the IC card 170 such as connection setting information for accessing to multiple service providers, and information which indicates priority. This function is provided by the settlement processing 110 of the user terminal 100.

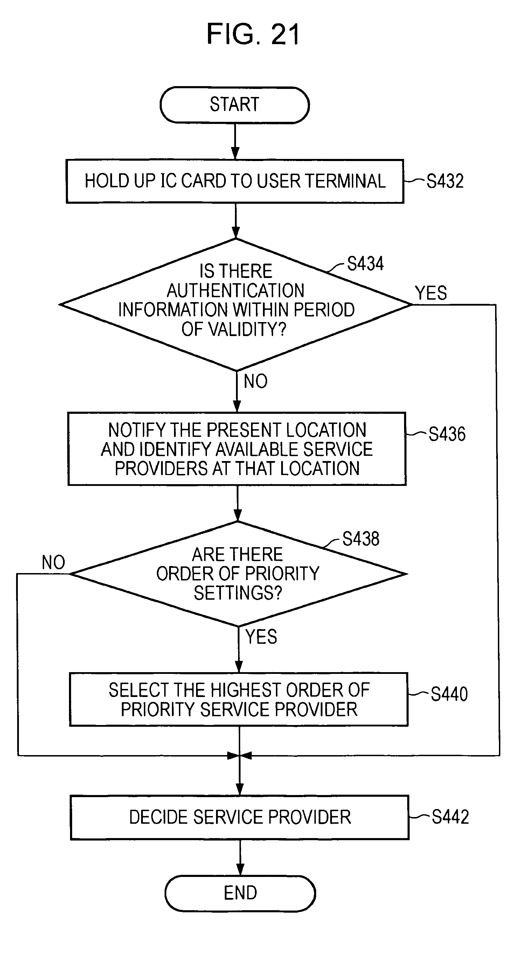

Here, a description will be made of a flow of the service provider selection processing, in the event that multiple service providers exist, with reference to Fig. 21. Fig. 21 is an explanatory diagram for illustrating a flow of the service provider selection processing in the event that multiple service providers exist.

First, upon the IC card 170 being held up to the reader/writer 104 (S432), the user terminal 100 determines whether or not there is authentication information regarding which the period of validity remains, by making reference to stored information of the IC card 170 (S434). If authentication information which has period of validity remaining exists, the user terminal 100 selects a service provider correspond to the authentication information thereof, and proceeds to step S442. On the other hand, if no authentication information which has period of validity remaining exists, the user terminal 100 proceeds to step S436. In the event of having proceeded to step S436, the user terminal 100 detects the present position, and identifies available service providers at that point (S436). At this time, the user terminal 100 detects the point based on the GPS function, position of the wireless base station 200, delay time of signals arriving from the wireless base station 200, or the like.

In town or the like, different service providers will be available according to the location of the user terminal 100. That is to say, the types of service providers connected to the wireless base station 200 accessible to the user terminal 100 differ, so selectable service providers differ according to the location of the user terminal 100. Thus, the user terminal 100 identifies available service providers at that point, by the processing of step S436. Next, the user terminal 100 refers to the information stored in the IC card 170, and determines whether priority settings exist or not (S438). If priority settings exist, the user terminal 100 proceeds to the processing of step S440. On the other hand, if no priority setting exists, the user terminal 100 proceeds to the processing of step S442.

Upon having proceeded to the processing of step S440, the user terminal 100 reads out information of priority from the IC card 170, and selects the highest-priority service provider (S440). In the event that selection conditions are set as priority information, the user terminal 100 selects a service provider which matches the selection condition best, as the highest-priority service provider. Next, the user terminal 100 proceeds to the processing of step S442, and determines the service provider (S442). In the event of proceeding from step S434 to step S442, the user terminal 100 determines the service provider corresponding to authentication information which has period of validity remaining. However, in the event that the service provider is not available for used, due to the communication environment or the like, an available service provider is selected at random, or the user is prompted to manually select a service provider.

Also, in the event of the processing having proceeded from step S438 to step S442, the user terminal 100 selects the service provider at random, or prompts the user to manually select the service provider. In this way, upon the processing of step s442 having been completed, and the service provider decided, the user terminal 100 executes user registration and fee settlement. However, if authentication information which has period of validity remaining exists, and if the service provider corresponding to the authentication information is available, the user terminal 100 uses the authentication information to perform user authentication. The user terminal 100 then ends the series of processing relating to the selection of service providers. Using selection method described above enables receiving of service from the desired service provider, just by holding up the IC card 170. Note that users can freely make settings of priority.

Thus, a description has been made of a modification, in which the system configuration of the network connection service providing system according to the present embodiment is partly modified. With the present modification, a system which reduces the operation burden that users perform up to starting of the network connection, by using the IC card 170 effectively, has been proposed. Here, usage of the IC card 170 has been prerequisite, but a system according to the present modification can be applied to a mobile terminal (mobile terminal 190) or the like which has function of the IC card 170. Hereinafter, a system for realizing these applications will be described.

### 4: Modification 2 (Authentication Method Using Mobile Terminal)

A description will be made of another modification of the present embodiment. The present modification proposes a system for using the mobile terminal 190 mounted with an IC chip 192, instead of the IC card 170. The arrangement described above for using the IC card 170 (hereinafter, technique 1) and a system for using the later-described mobile terminal 190 (hereinafter, technique 2), are common regarding the basic arrangement. However, if the mobile terminal 190 used, the security of information to be stored in the IC chip 192 is of concern, demanding devisal regarding the part related to the processing between the mobile terminal 190 and the IC chip 192. Hereinafter, a description will be made primarily of this devisal.

First, a description will be made of a system configuration of the network connection service providing system relating to technique 2, with reference to Fig. 17. However, only the differences between technique 1 and technique 2 are described here, and technique 1 will be referred to regarding common technical matters. Fig. 17 is an explanatory diagram for illustrating a system configuration example of the network connection service providing system, relating to technique 2.

A point of difference between the system configuration of technique 1 and that of technique 2 is in that the IC card 170 making up the system in technique 1 is replaced with the mobile terminal 190 in technique 2. Thus, users hold the mobile terminal 190 up to the reader/writer 104 in technique 2, rather than holding the IC card 170 up to the reader/writer 104. The mobile terminal 190 substantially has the same function as the IC card 170. However, the function is provided by the IC chip 192 mounted to the mobile terminal 190. Thus, rewriting information of the IC chip 192 by operation of the mobile terminal 190 and forming a storage region to the memory of the IC chip 192 means that a special application has to be installed to the mobile terminal 190.

In particular, the IC chip 192 mounted to the mobile terminal 190 is a general-purpose one. If the system is one using the IC card 170, the storage area can be divided at the side of the service providers and system administrator beforehand, and the IC card 170 can be distributed storing connection setting information or the like to users. However, it is realistically difficult with a system that uses the mobile terminal 190 for service providers and system administrators to divide their own storage areas in the IC chip 192, and to store connection setting information or the like therein, in the manufacturing process and the sale process of the mobile terminal 190. Thus, with the system that uses the IC terminal 190, users have to divide the storage area to the IC chip 192, using the mobile terminal 190, and to store connection setting information or the like.

However, it is complicated for users to perform the dividing processing of storage areas and storing processing of connection setting information or the like by manual operation, so the process itself may be fully automated or partly automated. In technique 2, an arrangement for performing such as dividing storage area to the IC chip 192 and storing connection setting information or the like is proposed, by obtaining a special application for the mobile terminal 190. First, as shown in Fig. 17, upon the user holding the mobile terminal 190 up to the reader/writer 104, and performing operation for starting the network connection, the user terminal 100 confirms whether the user is registered or not. If the user is registered, the user terminal 100 reads out authentication information and so forth from the IC chip 192 to execute user authentication, and starts the network connection.

On the other hand, if the user is unregistered, the mobile terminal 190 obtains an application for forming storage area for storing various types of information, relating to the service provider and information for receiving service from the service provider. Note that information of unregistered users can be confirmed by the mobile terminal 190 accessing the IC chip 192, and may be notified to the mobile terminal 190 from the user terminal 100 via the IC chip 192. Accordingly, as an obtaining method of the application, for example, there is a method to download from the authentication system 310 of a service provider, or the settlement system 320 providing electronic money service, via the mobile communication network which the mobile terminal 190 uses for data communication. Furthermore, there is a method to obtain the application via the reader/writer 104 and IC chip 192, from the user terminal 100.

In this way, upon obtaining of application being completed, the mobile terminal 190 divides the storage area for storing information to receive providing of service to the IC chip 192, using the application. Accordingly, the mobile terminal 190 obtains information to receive providing of service from a service provider or the like, and writes it to the divided storage area. Executing such a setting processing enables the general-purpose IC chip 192 mounted to the mobile terminal 190 to have the same function as the IC card 170 or the like in technique 1. Accordingly, after setting information is completed, user registration, fee settlement, and user authentication can be executed, in the same way as with the above described technique 1.

### 4-1: Function Configuration of Mobile Terminal

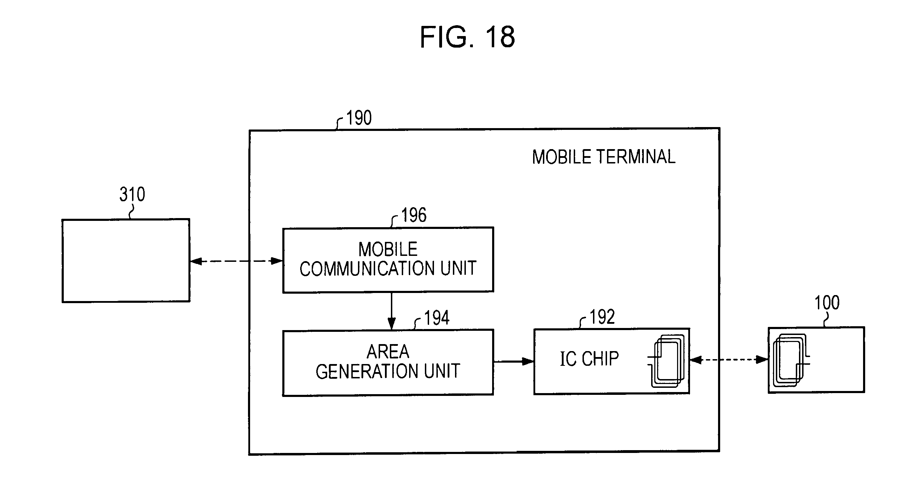

Here, a brief description will be made of the function configuration of the mobile terminal 190, with reference to Fig. 18. Fig. 18 is an explanatory diagram for illustrating function configuration example of the mobile terminal 190. As shown in Fig. 18, the mobile terminal 190 has, mainly, a mobile communication unit 196, an area generating unit 194, and an IC chip 192. The mobile terminal 190 also has an operation processing unit, display unit, input unit, and so forth, which are not shown.

The mobile communication unit 196 serves to realize data communication through the mobile communication network. The area generating unit 194 serves to generate a storage area to the IC chip 192, using the application obtained through data communication by the mobile communication unit 196 or non-contact communication by the IC chip 192. The IC chip 192 serves to transmit/receive data by non-contact communication between the reader/writer 104, and to store data in a secure manner. In the IC chip 192, a storage area is provided wherein various types of information such as shown in Figs. 4A and 4B is stored, same as the above-described IC card 170. Note that the storage area in which connection setting information and service usage information and so forth are stored is generated by the area generating unit 194. Note that the storage area in which electronic money service information is stored, is formed in the IC chip 192 beforehand.

Thus, a brief description has been made of function configuration of the mobile terminal 190. Next, a flow of the overall processing starting up to the network connection according to technique 2, including communication between the mobile terminal 190 and the IC chip 192, will be described.

### 4-2: Overall Processing Flow Starting up to Service Usage (If User Unregistered)

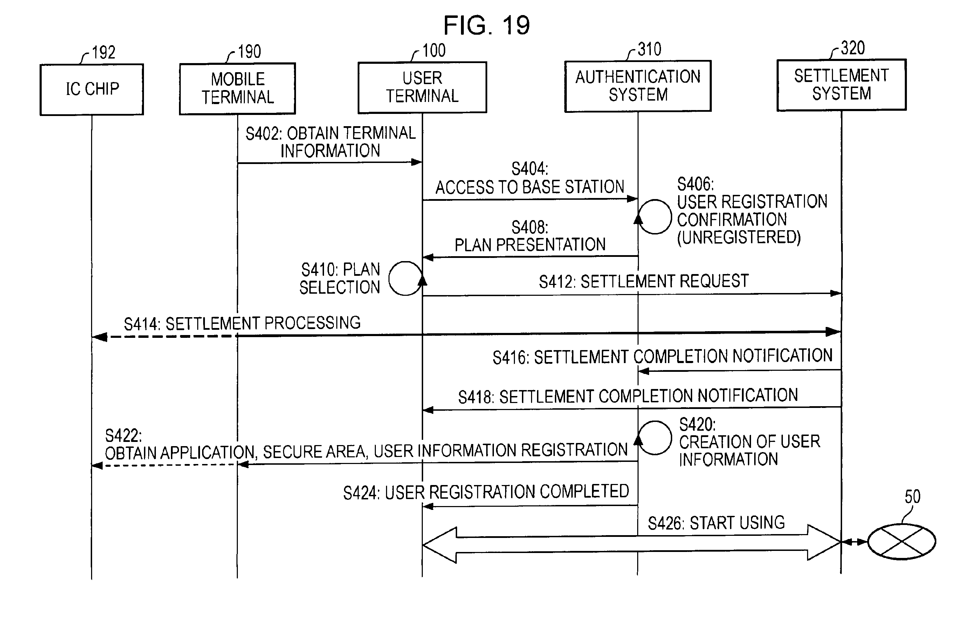

Here, a description will be made of the overall processing flow up to starting service providing on the network connection service providing system according to technique 2 with reference to Fig. 19. Fig. 19 is an explanatory diagram for illustrating the overall processing flow up to starting service providing on the network connection service providing system, according to technique 2.

As shown in Fig. 19, first, the mobile terminal 190 is held up to the reader/writer 104, and user information is obtained from the IC chip 192 of the mobile terminal 190, by the user terminal 100 (S402). Next, the user terminal 100 accesses the authentication system 310 via the wireless base station 200 (S404). Next, the authentication system 310 confirms whether or not there is user registration, based on user information (S406). Here, we will say that the user is unregistered. Next, the authentication system 310 presents a service plan to the user terminal 100 (S408).

Next, the user selects a service plan via the user terminal 100 (S410). Upon the service plan being selected, what has been selected is notified from the user terminal 100 to the authentication system 310, and the settlement request is transmitted from the authentication system 310 to the settlement system 320 (S412). Next, the settlement system 320 executes the settlement processing between the IC chip 192, mounted to the mobile terminal 190 (S414). Upon the settlement being completed, the settlement system 320 transmits a settlement completion notice to the authentication system 310 and the user terminal 100 (S416 and S418). The authentication system 310 which has received the settlement completion notice generates authentication information which the user uses for the authentication processing, at the time of starting the network connection (S420).

Next, the authentication system 310 transmits generated authentication information to the mobile terminal 190, along with the storage area generating application (S420). At this time, as a transmission path, for example, the mobile communication path is used. The mobile terminal 190 which has obtained the application generates a storage area at the IC chip 192, using the application, and stores authentication information or the like to the storage area (S422). Upon this processing being completed, the user registration is assumed to be completed, so the authentication system 310 notifies the completion of the user registration to the user terminal 100 (S424). Upon receiving the completion notice of the user registration, the user terminal 100 executes user authentication, using the authentication information stored in the IC chip 192

### of the mobile terminal 190, and starts connection to the network (S426).

As described above, in the event of using the mobile terminal 190, a storage area for storing relevant information to the network connection in the IC chip 192 has to be generated. This calls for an arrangement wherein the mobile terminal 190 obtains an application for creating an area. As described above, in technique 2, an arrangement wherein the mobile terminal 190 automatically obtains the application via the mobile communication network or the like has been proposed. Using such an arrangement enables users to have a way to be supplied with safe, convenient, and high-quality service, without operation burden, in the case of using the mobile terminal 190 for network connection service settlement and authentication.

### 5: Modification 3 (Configuration Enabling Selection of Multiple Settlement Methods)

Here, a description will be made of yet another modification according to the present embodiment. The modification described here relates to a system configuration wherein multiple settlement systems 320 exist, as shown in Fig. 22. The IC card 170 can store multiple types of electronic money service information. Also, the settlement methods of the network connection service providing system according to the present embodiment are not limited to certain types of electronic money services. Thus, an arrangement can be configured which enables users to use multiple electronic money services as settlement methods.

Thus, in a case of enabling users to use multiple electronic money services, for example, settlement systems 320 providing each of the electronic money services A, B, and C are included in the system configuration, as shown in Fig. 22, for example. Each settlement system 320 is connected to the authentication system 310, and if a settlement request is received from the authentication system 310, each settlement system 320 executes settlement processing between the IC card 170, and notifies the settlement completion notice to the authentication system 310. Communication between such the authentication system 310 and each settlement system 320 is substantially the same as the configuration of the network connection service providing system, shown in Fig. 10 or the like.

However, with the present modification, selecting an electronic money service to user for settlement has to be performed on the user's side. For example, as shown in Fig. 22, a method can be conceived for selecting a service plan from a plan selection page in the user terminal 100, wherein the settlement method is also selected together. Furthermore, a method can be conceived, in which priority is set to each electronic money service information stored in the IC card 170, so as to automatically select the settlement method, based on the priority thereof. Furthermore, the type of settlement method to be used for each service provider of the network connection service may be set.

If the settlement method (the type of settlement system 320) is selected at the user terminal 100, information for identifying the type of the selected settlement system 320 is notified to the authentication system 310 through the wireless base station 200 from the user terminal 100. Accordingly, when the authentication system 310 transmits the settlement request, the settlement request is transmitted to the settlement system 320 which is identified by notified information thereof, and the settlement processing is executed between the IC card 170. Such a configuration enables users to manually or automatically select electronic money service which wants to preferably use, in the case that multiple types of electronic money service information is stored to the IC card 170. If selection of the settlement method is automated, even in the case of employing the IC card 170 correspond to the multiple electronic money service, simply holding the IC card 170 up to the reader/writer 104 will complete the series of the processing according to the network connection service being provided.

### 6: Hardware Configuration of User Terminal, Etc.

Hereinafter, a description will be made of a configuration example of hardware which enables the functions of the user terminal 100, the reader/writer 104, the IC card 170, and IC chip 192, to be realized.

### Reader/Writer 104, IC Card 170, IC Chip 192

First, description will be made of a circuit configuration example of the reader/writer 104, IC card 170, and IC chip 192, with reference to Figs. 24A and 24B. Figs. 24A and 24B are explanatory diagrams for illustrating a circuit configuration example of the reader/writer 104, IC card 170, and IC chip 192. Note that in the following description, the IC card 170 and the IC chip 192 are collectively called "IC devices". Additionally, the reader/writer 104 will be simply written as "reader/writer".

### Circuit Configuration of IC Card / IC Chip

As shown in Fig. 24A, an IC device is configured of an antenna 702, a front-end circuit 704, a modulator 706, a command regenerator 708, a clock regenerator 710, a control circuit 712, an encrypting circuit 714, and memory 16. If the IC device is mounted to a mobile terminal or the like, a cable interface circuit for connecting to the control unit of the mobile terminal or the like, is provided.

As for an antenna 702 of the IC device, in many cases, a loop antenna is used. A loop antenna is also provided in the reader/writer, and if current is supplied to the loop antenna of the reader/writer an induction magnetic field occurs. In this way, upon the IC device being held up, in a state in which an induction magnetic field is occurring, induced electromotive force occurs at the loop antenna of the IC device, under the influence of magnetic field. Such an arrangement places the loop antenna of the IC device and the loop antenna of reader/writer in a magnetically connected state during the non-contact communication.

Thus, transmission/reception of command and response data becomes can be performed by modulation of current that flows to the loop antenna. Additionally, during the non-contact communication, electric power is induced at the loop antenna of the IC device, and this electric power can be used for driving electricity of the IC device. That is to say, including the loop antenna enables the IC device to receive information such as commands or the like, and supply of electricity, from the reader/writer during non-contact communication. In this way, current induced to the antenna 702, is input to the front end circuit 704. Note that with non-contact communication, in many cases, a carrier wave of 13.56 MHz is used.

At the front-end circuit 704, an electric power signal received at the antenna 702 (carrier wave) is rectified to regenerate DC power source. Regenerated DC power source is supplied as driving electric power supply to the control circuit 712 and so forth. Also, the front-end circuit 704 divides the obtained carrier wave of 13.56 MHz to input to the command regenerator 708 and clock regenerator 710. The command regenerator 708 regenerates commands from the input carrier wave, to input to the control circuit 712. On the other hand, the clock regenerator 710 regenerates the clock for driving logic circuit (not shown) from the input carrier wave, to input to the control circuit 712.

Upon electric power being supplied to each component of the IC device, the control circuit 712 drives and controls each circuit according to the commands regenerated by the command regenerator 708. Accordingly, data output from the processing of the control circuit 712 is input to the encrypting circuit 714 to be encrypted. Accordingly, the data encrypted in the encrypting circuit 714 is stored in the memory 716. The memory 716 is a storage for storing data. As for the memory 716, in many cases, semiconductor memory is used. However, magnetic recording media, optical recording media, magneto-optical recording media or the like, can be used as the memory 716.

On the other hand, in the case of transmitting encrypted data stored within the memory 716, the encrypted data is read out from the memory 716 by the control circuit 712 to be input to the modulator 706. The encrypted data input to the modulator 706 is modulated, based on a predetermined modulation method,

### and input to the front-end circuit 704. The front-end circuit 704 changes load impedance at a feeding point of the antenna 702, based on the encrypted data modulated by the modulator 706, and the magnetic field generated by the antenna 702 is made to fluctuate. This magnetic fluctuation changes the current flowing through the loop antenna of the reader/writer that is connected magnetically, and the encrypted data is transmitted to the reader/writer.

Thus, description has been made of a circuit configuration example of the IC device. Next, a description will be made of a circuit configuration example of the reader/writer.

### Circuit Configuration of Reader/Writer

The reader/writer is configured of an antenna 730, filter 732, a reception amplifier 734, a frequency translator 736, a discriminator 738, a logic circuit 740, a control circuit 742, memory 744, a modulator 746, a local oscillator 750, a transmission amplifier 748, and a cable interface circuit 752, as shown in Fig. 24B.

The reader/writer supplies commands and electric power to the IC device, using magnetic connection between the IC device. Upon starting non-contact communication, the reader/writer first supplies electric power to the IC device through the antenna 730, and activates each circuit of the IC device. Accordingly, after each circuit of the IC device is activated, the reader/writer starts non-contact communication, based on a predetermined transmission protocol. As for the predetermined transmission protocol, for example, rules relating to communication connection establishing processing, anti-collision processing, and authentication processing, and the like, are stipulated.

Upon starting non-contact communication, the reader/write controls the control circuit 742 to read data out form the memory 716, which is then input to the logic circuit 740. The data which is input to the logic circuit 740 and subjected to predetermined processing is input to the modulator 746. A carrier wave of a predetermined frequency, generated at the local oscillator 750, is input to the modulator 746. The modulator 746 modulates the carrier wave based on data input from the logic circuit 740, and generates a modulated wave. The modulated wave generated at the modulator 746 is input to the transmission amplifier 748. The modulated wave amplified at the transmission amplifier 748 is transmitted to the IC device via the antenna 730.

Conversely, if a modulation wave from the IC device is received, the modulation wave received at the antenna 730 is input to the reception amplifier 734 through the filter 732.

The carrier wave is input from the local oscillator 750 to the frequency translator 736. Thus, the frequency translator 736 converts the frequency of the modulation wave input from the reception amplifier 734 so as to be synchronous with the carrier wave.

The modulation wave output from the frequency translator 736 is converted into data by the discriminator 738, and input to the logic circuit 740. Data output from the logic circuit 740 is stored in the memory 744 via the control circuit 742. As for the memory 744, in many cases, semiconductor memory is used. However, magnetic recording media, optical recording media, magneto-optical recording media or the like may be used as the memory 744. Accordingly, data output from the logic circuit 740 is output to external equipment connected by the cable interface circuit 752, if appropriate. Thus, a description has been made of the circuit configuration of the reader/writer.

Both the above described IC device and reader/writer may be installed in one electronic equipment. Examples of the electronic equipment in which one or both of the above described IC device and reader/writer may be installed include mobile phones, mobile information terminals, various types of communications equipment, information processing apparatuses such as personal computers, game machines, information household appliances and so forth. It goes without saying that the IC device can be carried out as an IC card or IC tag, and the reader/writer can be carried out as a reader/writer apparatus.

### User Terminal 100

Next, a description of a hardware configuration example of the user terminal 100 will be made with reference to Fig. 23. Functions of each component included in the above user terminal 100 has can be realized by using the hardware configuration of an information processing apparatus shown in Fig. 23, for example. That is to say, the functions of each component thereof are realized by controlling the hardware shown in Fig. 23, using a computer program. Note that the form of the hardware is optional, including for example, personal computers, mobile phones, mobile information terminals such as PHS (Personal Handy-phone System) terminals and PDA (Personal Digital Assistant) terminals, game machines, and various intelligent household appliances.

As shown in Fig. 23, this hardware primarily has a CPU 902, ROM 904, RAM 906, a host bus 908, an external bus 912, an interface 914, a bridge 910, an input unit 916, an external unit 918, a storage unit 920, a drive 922, a connection port 924, and a communication unit 926.

The CPU 902 functions as an operation processor or a control unit for example, and controls all or a part of operation of each component, based on various programs stored in the ROM 904, RAM 906, storage unit 920, and removable recording medium 928. The ROM 904 serves as a storage for storing data or the like, for using programs or operations read into the CPU 902. For example, the programs read into the CPU 902, and various parameters or the like which change as appropriate when the program is executed, are stored in the RAM 906, temporarily or permanently.

These components are connected mutually via the host bus 908, for example, capable of high speed data transmission. On the other hand, the host bus 908 is, for example, connected to the external bus 912 of which the data transmission speed is comparatively low, via the bridge 910. Additionally, as for the input unit 916, for example, a mouse, a keyboard, a touch panel, a button, a switch, a lever, or the like, are used. Furthermore, as for the input unit 916, a remote controller may be used, which can transmit a control signal, using infrared rays or other electric waves.

As for the output unit 918, for example, a display apparatus such as a CRT, LCD, PDP, or ELD, an audio output device such as a speaker, or headphones, a printer, a facsimile, or the like, are apparatuses which enable visually and audibly notifying the obtained information to the user.

The storage unit 920 is an apparatus for storing various types of data. As for the storage unit 920, for example, a magnetic recording medium such as an HDD (Hard Disc Drive), semiconductor device, optical recording medium, or magneto-optical recording device or the like are used.

The drive 922 is an apparatus for reading out information stored in the removable recording medium 928 such as a magnetic disk, an optical disk, a magneto-optical disk, or semiconductor memory, and writing information to the removable recording medium 928. The removable recording medium 928 is, for example, DVD media, Blu-ray media, HD DVD media, various kinds of semiconductor media, or the like. It goes without saying that the removable recording medium 928, for example, may be an IC card or electronic equipment or the like, in which is mounted a non-contact IC chip.

The connection port 924 is a port for connecting external connection equipment 930, such as a USB port, IEEE 1394 port, SCSI (Small Computer System Interface), RS-232C port, or optical audio terminal or the like. The external connection equipment 930 may be, for example, a printer, a mobile music player, a digital camera, a digital video camera, an IC recorder, or the like.

The communication unit 926 is a communication device for connecting to the network 932, and is for example, cable or wireless LAN (Local Area Network), Bluetooth (a registered trademark), or communication card for WUSB (Wireless USB), a router for optical communication, a router for ADSL (Asymmetric Digital Subscriber Line), or a modem for various communications, or the like. Accordingly, the network 932 is configured of a network connected to the communication unit 926 by cable or wirelessly, such as the Internet, home LAN, infrared communication, visible light communication, broadcasting, satellite communication, and so forth.

### Remarks

The user terminal 100 above is an example of a communication apparatus. The IC card 170 and the mobile terminal 190 (IC chip 192) above are an example of a non-contact communication device. The reader/writer 104 above is an example of a non-contact communication unit. The settlement processing unit 110 above is an example of a settlement processing unit and an authentication information recording unit. The connection authentication unit 112 above is an example of an authentication processing unit.

The apparatus included in the authentication system 310 above is an example of another apparatus. The mobile communication unit 196 above is an example of mobile communication unit, and an application obtaining unit. The area generating unit 194 above is an example of a domain formation unit.

The present application contains subject matter related to that disclosed in Japanese Priority Patent Application JP 2009-132285 filed in the Japan Patent Office on June 1, 2009, the entire content of which is hereby incorporated by reference.

Thus, while a preferred embodiment of the present invention has been described above with reference to the attached drawings, it goes without saying that the present invention is not restricted to such an example. It should be understood by those skilled in the art that various modifications, combinations, sub-combinations and alterations may occur depending on design requirements and other factors insofar as they are within the scope of the appended claims or the equivalents thereof.

## Claims

1. A communication apparatus comprising:
a wireless communication unit which connects to a network via another apparatus by wireless communication;
a settlement processing unit which executes settlement processing of connection fees to said network by controlling a non-contact communication unit capable of reading out information stored in a non-contact communication device via non-contact communication, and writing information to said non-contact communication device via non-contact communication so as to update monetary information stored in said non-contact communication device;
an authentication information recording unit which controls said non-contact communication unit to write authentication information, provided from said other apparatus when settlement processing by said settlement processing device is completed, to said non-contact communication device; and
an authentication processing unit which controls said non-contact communication unit to read said authentication information out from said non-contact communication device, and executes authentication processing as to said other apparatus using said authentication information, thereby establishing a network connection by said wireless communication unit.

2. The communication apparatus according to Claim 1,
wherein a period of validity is set for said authentication information;
and wherein, in the event that said network connection is temporarily cut off, and connection to said network is attempted again within the period of validity for the authentication information written to said non-contact communication device, said settlement processing unit does not execute settlement processing for connection fees to said network, and said authentication processing unit executes authentication processing regarding said other apparatus using authentication information read out from said non-contact communication device.

3. The communication apparatus according to Claim 2, wherein, in the event that authentication information with a period of validity is written to said non-contact communication device at another communication apparatus, and connection to said network is attempted by holding up said non-contact communication device to said non-contact communication unit of said communication apparatus within the period of validity of said authentication information, said settlement processing unit does not execute settlement processing for connection fees to said network, and said authentication processing unit executes authentication processing regarding said other apparatus using authentication information read out from said non-contact communication device.

4. The communication apparatus according to Claim 3, wherein, in the event that there exist a plurality of said other apparatuses providing connection service to said network, said authentication information recording unit controls said non-contact communication unit so as to write, to said non-contact communication device, information of said other apparatuses providing connection service which is the object of settlement processing at said settlement processing unit, in a manner correlated with said authentication information.

5. The communication apparatus according to Claim 4,
wherein said non-contact communication device stores address information for accessing each of said other apparatuses by said wireless communication unit;
and wherein said authentication information recording unit controls said non-contact communication unit so as to write, to said non-contact communication device, address information which is information of said other apparatuses, said authentication information, and the period of validity of said authentication information, in a correlated manner;
and wherein said authentication processing unit identifies said authentication information within the period of validity at the point that connection to said network is attempted, and executes authentication processing to said other apparatuses by accessing said other apparatuses based on address information correlated with said authentication information that has been identified.

6. The communication apparatus according to any of the preceding claims, wherein, in the event that there exist a plurality of said other apparatuses providing connection service to said network, and order of priority has been set of each of set other apparatuses;
said settlement processing unit performs settlement processing of connection fees to said network with a connection service which said other apparatus with high order of priority provides, as an object;
and said authentication processing unit executes authentication processing as to said other apparatus with high order of priority, to establish network connection by said wireless connection unit.

7. The communication apparatus according to any of the preceding claims, further comprising:
an area detecting unit which detects an area where said apparatus is located;
wherein, in the event that there exist a plurality of said other apparatuses providing connection service to said network, and the quality of connection services provided by each of said other apparatuses differ from one area to another,
said settlement processing unit identifies said other apparatus with high quality of said connection service in the area detected by said area detecting unit, and executes settlement processing of connection fees to said network, with the connection service provided by said other apparatus as an object, and
said authentication processing unit executes authentication processing as to the other apparatus of which the quality of said connection service is high, so as to establish network connection by said wireless communication unit.

8. The communication apparatus according to any of the preceding claims, further comprising:
a viewing/listening restriction unit which reads out age information stored in said non-contact communication device by controlling said non-contact communication, and imposes viewing/listening restriction on contents provided via network connection by said wireless communication unit, based on said age information.

9. The communication apparatus according to any of the preceding claims, wherein, in the event that a plurality of types of monetary information are stored in said non-contact communication device, and an order of priority is set for each of said types of monetary information, said settlement processing unit executes settlement processing of connection fees for said network by updating said monetary information of the type with the highest order of priority.

10. The communication apparatus according to any of the preceding claims, wherein said non-contact communication device is installed in a mobile terminal, said mobile terminal further including
a mobile communication unit which performs communication via a different wireless communication network from the wireless communication network which said wireless communication unit uses,
an application obtaining unit which obtains an application for forming a storage region for said authentication information in said non-contact communication device using said mobile communication unit, and
a region formation unit which forms a storage region for said authentication information in said non-contact communication device using the application obtained by said application obtaining unit;
wherein, in the event of attempting connection to a network via a certain said other apparatus for the first time, said mobile terminal uses said application obtaining unit to obtain an application for forming a storage region for authentication information provided by said other apparatus, and uses said application to form a storage region for said authentication information by said region formation unit;
and wherein said information recording unit writes said authentication information to the storage region formed by the region formation unit of said mobile terminal.

11. A mobile terminal, comprising:
a non-contact communication device regarding which information is read and written by non-contact communication by a non-contact communication unit, which a communication apparatus capable of connecting to a network via another apparatus by wireless communication has;
a mobile communication unit which performs communication via a different wireless communication network from the wireless communication network which said wireless communication unit uses;
an application obtaining unit which obtains an application for forming a storage region for said authentication information in said non-contact communication device using said mobile communication unit; and
a region formation unit which forms a storage region for said authentication information in said non-contact communication device using the application obtained by said application obtaining unit;
wherein a first storage region where monetary information is stored is provided in said non-contact communication device;
and wherein, in the event of being held up to the non-contact communication unit of said communication apparatus to attempt connection to a network via a certain said other apparatus for the first time, said application obtaining unit is used to obtain an application for forming a storage region for authentication information provided by said other apparatus, and said application is used to form a second storage region for said authentication information by said region formation unit;
and wherein monetary information stored in said first storage region is updated in settlement processing of said communication apparatus, authentication information provided from said other apparatus due to completion of said settlement processing is stored to said second storage region, and the authentication information stored in said second storage region is used to execute authentication processing as to said other apparatus.

12. A communication system comprising:
a first communication apparatus including
a wireless communication unit which connects to a network via another apparatus by wireless communication,
a settlement processing unit which executes settlement processing of connection fees to said network by controlling a non-contact communication unit capable of reading out information stored in a non-contact communication device via non-contact communication, and writing information to said non-contact communication device via non-contact communication, so as to update monetary information stored in said non-contact communication device,
an authentication information recording unit which controls said non-contact communication unit to write authentication information, provided from said other apparatus when settlement processing by said settlement processing unit is completed, to said non-contact communication device, and
an authentication processing unit which controls said non-contact communication unit to read said authentication information out from said non-contact communication device, and executes authentication processing as to said other apparatus using said authentication information; and
a second communication apparatus in which said non-contact communication device is installed, said second communication apparatus including
a mobile communication unit which performs communication via a different wireless communication network from the wireless communication network which the wireless communication unit of said first communication apparatus uses,
an application obtaining unit which obtains an application for forming a storage region for said authentication information in said non-contact communication device using said mobile communication unit, and
a region formation unit which forms a storage region for said authentication information in said non-contact communication device using the application obtained by said application obtaining unit;
wherein, in the event of attempting connection to a network via a certain said other apparatus for the first time, said mobile terminal uses said application obtaining unit to obtain an application for forming a storage region for authentication information provided by said other apparatus, and uses said application to form a storage region for said authentication information by said region formation unit;
and wherein said second communication apparatus writes said authentication information to the storage region formed by said region formation unit of said mobile terminal using said authentication processing unit, and executes authentication processing as to said other apparatus using the authentication information stored in said storage region by said authentication processing unit, thereby establishing a network connection by said wireless communication unit.

13. A non-contact communication device comprising:
a storage unit capable of which information can be read/written by non-contact communication via a non-contact communication unit of a communication apparatus having a wireless communication unit which connects to a network via another apparatus by wireless communication;
wherein said storage unit is provided with a first storage region where monetary information is stored, and a second storage region where authentication information used for said communication apparatus to connected to said network is stored;
and wherein, in the event of being held up to the non-contact communication unit of said communication apparatus to attempt connection to said network at said communication apparatus, monetary information stored in said first storage region is updated via said non-contact communication during settlement processing of connection fees to said network, and when said settlement processing is completed, authentication information provided from said other apparatus is stored in said second storage region via said non-contact communication, with the authentication information stored in said second storage region is used for authentication processing for establishing network connection by said wireless communication unit.

14. A network connection method, for a communication apparatus to perform communication using a wireless communication unit which connects to a network via another apparatus by wireless communication, and a non-contact communication unit capable of reading out information stored in a non-contact communication device via non-contact communication and writing information to said non-contact communication device via non-contact communication, said method comprising the steps of:
first controlling, of said non-contact communication unit, to update monetary information stored in said non-contact communication device, so as to execute settlement processing for connection fees to said network;
second controlling, of said non-contact communication unit by said communication device, to write authentication information, provided from said other apparatus when settlement processing in said first controlling has been completed, to said non-contact communication device; and
third controlling, of said non-contact communication unit by said communication device, to read said authentication information out from said non-contact communication device, and execute authentication processing as to said other apparatus using said authentication information, thereby establishing a network connection by said wireless communication unit.

15. A program causing a computer to execute:
control of a communication apparatus to perform communication using
a wireless communication unit which connects to a network via another apparatus by wireless communication, and
a non-contact communication unit capable of reading out information stored in a non-contact communication device via non-contact communication and writing information to said non-contact communication device via non-contact communication; and
the steps of
first controlling, of said non-contact communication unit, to update monetary information stored in said non-contact communication device, so as to execute settlement processing for connection fees to said network,
second controlling, of said non-contact communication unit by said communication device, to write authentication information, provided from said other apparatus when settlement processing in said first controlling has been completed, to said non-contact communication device, and
third controlling, of said non-contact communication unit by said communication device, to read said authentication information out from said non-contact communication device, and execute authentication processing as to said other apparatus using said authentication information, thereby establishing a network connection by said wireless communication unit.
